(19) Europäisches Patentamt
European Patent Office
Office européen des brevets

(11) **EP 1 696 524 B1**

(12) **EUROPEAN PATENT SPECIFICATION**

(45) Date of publication and mention
of the grant of the patent:
**02.04.2014 Bulletin 2014/14**

(51) Int Cl.:
***H01S 3/094*** (2006.01)        ***H01S 3/00*** (2006.01)
***H01S 3/067*** (2006.01)        ***H01S 3/131*** (2006.01)
***H01S 3/30*** (2006.01)

(21) Application number: **06101460.1**

(22) Date of filing: **09.02.2006**

(54) **Fast dynamic gain control in an optical fiber amplifier**

Schnelle dynamische Verstärkungsregelung in einem optischen Faserverstärker

Contrôle rapide de gain dynamique dans un amplificateur à fibre optique

(84) Designated Contracting States:
**DE FR GB IE**

(30) Priority: **24.02.2005 US 656111 P**
    **15.11.2005 US 274666**
    **15.11.2005 US 273868**

(43) Date of publication of application:
**30.08.2006 Bulletin 2006/35**

(73) Proprietor: **AT&T Intellectual Property II, L.P.**
**Reno, NV 89502 (US)**

(72) Inventors:
• **ZHOU, Xiang**
**07748 Middletown**
**New Jersey (US)**

• **BIRK, Martin**
**07718 Belford**
**New Jersey (US)**

(74) Representative: **Suckling, Andrew Michael**
**Marks & Clerk LLP**
**Fletcher House**
**Heatley Road**
**The Oxford Science Park**
**Oxford OX4 4GE (GB)**

(56) References cited:
**WO-A-2004/032383      US-A1- 2002 054 733**
**US-A1- 2003 147 124      US-A1- 2004 052 453**
**US-B1- 6 624 926        US-B1- 6 690 504**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This application claims priority to provisional U.S. Application Ser. No. 60/656.111 ("Fast dynamic gain control in an optical fiber amplifier"), filed February 24, 2005.

### FIELD OF THE INVENTION

The present invention relates to dynamically controlling the gain of an optical fiber amplifier.

### BACKGROUND OF THE INVENTION

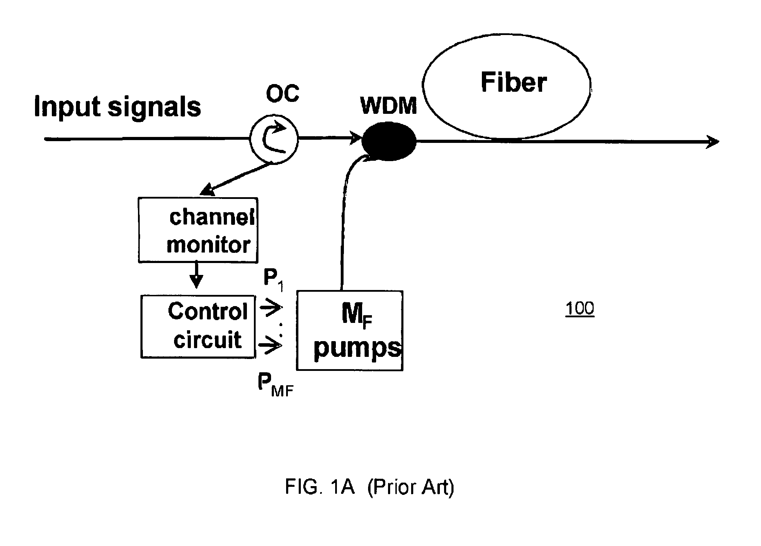

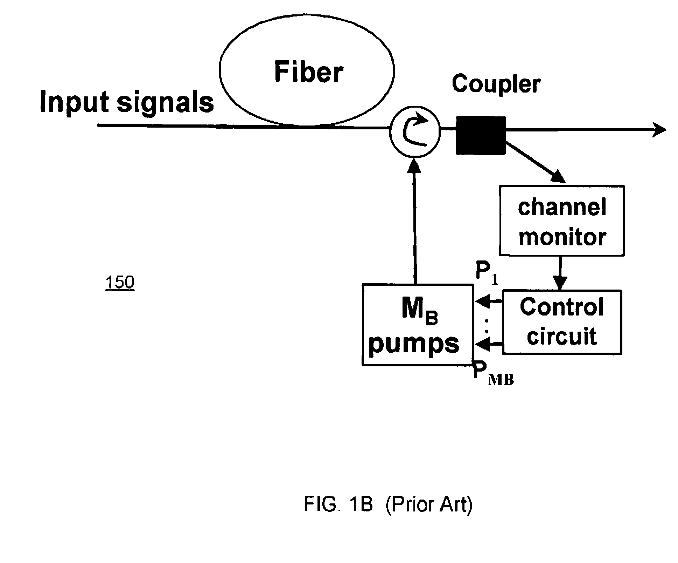

Distributed Raman fiber amplification has been proven to be a powerful technique to improve the optical signal to noise ratio (OSNR) margin of long haul wavelength-division multiplexing (WDM) system. The discrete Raman fiber amplifier is also an effective method to compensate the loss of the dispersion fiber module and/or provide extra bandwidth. A Raman fiber amplifier can be configured either as a forward-pumped Raman fiber amplifier (RFA) or as a backward-pumped RFA. It has been shown that using both forward-pumped RFA and backward-pumped RFA can achieve better noise performance and Rayleigh crosstalk performance than purely backward pumping, and therefore enables very long span WDM transmission. On the other hand, optical communication is evolving from current point-to-point systems to dynamic optical networks. In a dynamic optical network, channels will be added and dropped to meet the varying capacity demands. In addition, accidental loss of channels due to fiber cut or from amplifier failure will also lead to variation of the overall optical power in the transmission system. To keep the power of the surviving channels at a constant level, fast dynamic gain control is indispensable for both forward-pumped distributed/discrete RFA and backward-pumped distributed/discrete RFA, as well as EDFA's. Two control approaches have been demonstrated in recent years. For the first approach, the Raman pump powers are controlled by a closed negative feedback loop, in which the signal gains are continuously monitored and compared with the target gain. The error control signal is usually generated through a proportional, integral and differential (PID) control algorithm. Figure 1A shows dynamic gain control apparatus 100 for a multi-wavelength forward-pumped Raman fiber amplifier according to the prior art. Figure 1B shows dynamic gain control apparatus 150 for a multi-wavelength backward-pumped Raman fiber amplifier according to prior art. This approach exhibits a typical control speed of tens to several hundred microseconds. The corresponding speed may be acceptable for a backward-pumped distributed RFA. This approach is not typically fast enough for a forward-pumped RFA (either distributed or discrete), and many times even not fast enough for a backward-pumped discrete RFA, which typically has much shorter fiber length than a distributed RFA. This observation is due to the fact that the gain transients of a forward-pumped RFA are decided by the walk-off time (sub-$\mu$s) between the signal and the pump while a backward-pumped RFA is decided by the transit time through the fiber (hundreds of $\mu$s for a typical distributed RFA).

[04] The second demonstrated method is referred to the all-optical gain clamping technique, which is based on a closed optical feedback loop. However this method introduces noise degradation and is not faster than the first method due to the same nature (closed feedback loop). With another approach, a dynamic gain control scheme based on a predetermined table between the detected output signal power variations and the required pump power adjustments has been proposed for a backward-pumped RFA. Because the look-up table varies with the load (i.e., the power of the input signals), not only is an extra control loop needed to detect the load, but also numerous tables are required to be stored in the control circuits. This not only increases its implementation complexity/cost, but also slows its capability of dynamic gain control.

There is a real need in the art for a fast and efficient dynamic gain control technique suitable for both forward-pumped distributed/discrete RFA and backward-pumped discrete RFA as well as other types of optical fiber amplifiers such as Erbium doped fiber amplifiers (EDFA's).

US-A-2002/054733 discloses a Raman optical fiber amplifier that supports a plurality of optical signal channels and comprises an optical pump for pumping the Raman fibre. Computation of a new power light distribution is made by multiplying the estimated gain profile over all wavelength channels with a number of stored gain profiles, and choosing the stored gain profile that leads to the flattest curve.

US-A-2003/0117694 describes a method of controlling a Raman gain caused by simultaneous application of pump lights of a plurality of wavelengths to an optical fibre, which includes, based on a relation of a ratio coefficient which is a ratio of power of each pump light to total power of all the pump lights with the Raman gain, from a designated value of the Raman gain, calculating power of each pump light realising the designated Raman gain within a designated wavelength range, and controlling power of each pump light applied to the optical fibre to apply pump light at each power calculated.

Document US 6 624 926 discloses a Raman fibre that supports a plurality of optical signal channels is backward pumped by three pump lasers. A partitioning unit comprises a coupler to out couple a portion of the input power from the optical signal channels; a one-to-three WDM partitions the optical signal channels into three wavelength regions;

three photo-detectors measure the input power variation in each wavelength region.

A control unit determines a pump power adjustment for each pump source using a predetermined linear function relating the actual gain variation for each wavelength region to the corresponding pump power adjustement. The output optical power in each wavelength regions is measured after Raman amplification and used to determine the pump power adjustements. Controlling is thus performed ina closed loop configuration.

The partitioning unit for the input signal channels is located at a first geographical location, the optical pumps and the control unit are located at a second geographical location. The two locations are connected through an optical communication channel.

A first aspect of the present invention provides an optical fiber amplifier as defined in claim 1 or claim 2. A second aspect of the present invention provides a method of controlling a gain of an optical fiber amplifier as defined in claim 10 or claim 11. Other features of the invention are set out in the dependent claims.

BRIEF SUMMARY OF THE INVENTION

The present invention provides methods and apparatuses for controlling a gain of an optical fiber amplifier. Gain circuitry operates in an opened loop configuration and uses a predetermined function relating a power variation of at least one wavelength region before amplification with a pump power adjustment for at least one optical pump.

The present invention provides methods and apparatuses for controlling a gain of an optical fiber amplifier. Gain circuitry operates in an opened loop configuration and uses a predetermined function relating a power variation of at least one wavelength region before amplification with a pump power adjustment for at least one optical pump.

With one aspect of the invention, two approximate linear relationships between the input signal power variations and the required pump power adjustments are utilized in controlling a Raman fiber amplifier (RFA). The RFA may be configured as either a forward-pumped RFA or a backward-pumped RFA using one of the two approximate linear relationships.

With another aspect of the invention, each approximate linear relationship includes at least one linear coefficient that relates a power variation for a specific wavelength region and a power adjustment of a specific Raman pump.

With another aspect of the invention, each linear coefficient of an approximate linear relationship is determined by experimentally observing or simulating an optical fiber system. Optical signal channels are configured so that the power variations of all of the wavelength regions may be ignored except for a specific wavelength region. A corresponding linear coefficient is determined by dividing the corresponding power adjustment for the specific pump by the power variation of the specific wavelength region.

With another aspect of the invention, a dynamic gain control technique for both a forward-pumped distributed/discrete RFA and a backward-pumped discrete RFA enables the pump power adjustment to be completed in only one-step within a very short period of time ($<<1$ $\mu$s). For a forward-pumped RFA, the dynamic gain control technique enables the powers of the optical pumps to be adjusted synchronously with the input signal power and therefore perform fast dynamic gain control.

With another aspect of the invention, the dynamic gain control technique is also applicable to an Erbium-doped fiber/waveguide amplifier (EDFA/EDWA).

With another aspect of the invention, a dynamic gain control technique controls a backward-pumped Raman amplifier, in which the signal power variation is determined at one geographical location and the optical pumps are controlled at another geographical location.

BRIEF DESCRIPTION OF THE DRAWINGS

A more complete understanding of the present invention and the advantages thereof may be acquired by referring to the following description in consideration of the accompanying drawings, in which like reference numbers indicate like features and wherein:

Figure 1A shows dynamic gain control method for a multi-wavelength forward-pumped Raman fiber amplifier according to prior art;

Figure 1B shows dynamic gain control method for a multi-wavelength Backward-pumped Raman fiber amplifier according to prior art;

Figure 2 shows an experimental setup for a forward-pumped Raman fiber amplifier;

Figure 3 shows Raman pump powers in a linear scale as a function of the input signal power in a linear scale for a forward-pumped Raman fiber amplifier;

Figure 4 shows Raman pump powers in a decibel scale as a function of the input signal power in a linear scale for a forward-pumped Raman fiber amplifier;

Figure 5 shows a dynamic gain control circuit for a forward-pumped Raman fiber amplifier;

Figure 6 shows a target Raman fiber amplifier gain profile in accordance with an embodiment of the invention;

Figure 7 shows a first example that compares gain deviation with and without dynamic gain control;

Figure 8 shows a second example that compares gain deviation with and without dynamic gain control;

Figure 9 shows a third example that compares gain deviation with and without dynamic gain control;

Figure 10 shows a fourth example that compares gain deviation with and without dynamic gain control;

Figure 11 shows a fifth example that compares gain deviation with and without dynamic gain control;

Figure 12 shows a sixth example that compares gain deviation with and without dynamic gain control;

Figure 13 shows a seventh example that compares gain deviation with and without dynamic gain control in accordance with an embodiment of the invention;

Figure 14 shows an eighth example that compares gain deviation with and without dynamic gain control;

Figure 15 shows a comparison of two control schemes;

Figure 16 shows an experimental set up for investigating behaviour of a backward-pumped Raman fiber amplifier in accordance with an embodiment of the invention;

Figure 17 shows Raman pump powers in a linear scale as a function of the input signal power in a linear scale for a backward-pumped Raman fiber amplifier in accordance with an embodiment of the invention;

Figure 18 shows Raman pump powers in a decibel scale as a function of the input signal power in a linear scale for a backward-pumped Raman fiber amplifier in accordance with an embodiment of the invention;

Figure 19 shows a backward-pumped Raman fiber amplifier;

Figure 20 shows a backward-pumped Raman fiber amplifier;

Figure 21 illustrates an example of dynamic gain control for a forward-pumped Raman fiber amplifier;

Figure 22 illustrates an example of dynamic gain control for a backward-pumped Raman fiber amplifier in accordance with an embodiment of the invention;

Figure 23 shows a backward-pumped Raman fiber amplifier in accordance with an embodiment of the invention;

Figure 24 shows a backward-pumped Raman fiber amplifier in accordance with an embodiment of the invention;

Figure 25 shows an optical fiber system that utilizes dynamic control for both a forward-pumped Raman fiber amplifier and a backward Raman fiber amplifier; and

Figure 26 shows an optical fiber system that utilizes dynamic control for both a forward-pumped Raman fiber amplifier and a backward Raman fiber amplifier.

DETAILED DESCRIPTION OF THE INVENTION

In the following description of the various embodiments, reference is made to the accompanying drawings which form a part hereof, and in which various embodiments are shown by way of illustration in which the invention may be practiced. It is to be understood that other embodiments may be utilized and structural and functional modifications may be made without departing from the scope of the present invention.

Definitions for the following terms are included to facilitate an understanding of the detailed description.

• Optical fiber amplifier - a device to amplify an optical signal from an optical fiber facility without converting the signal from optical to electrical back again to optical energy.

• Optical pump - a shorter wavelength laser that is used to pump a length of optical fiber with energy to provide amplification of one or more longer wavelengths.

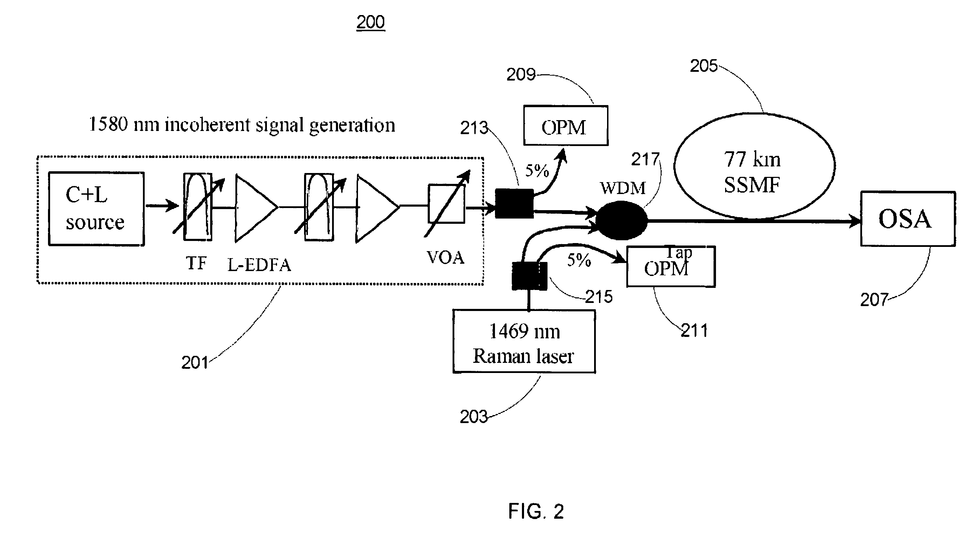

Figure 2 shows an experimental setup 200 for a forward-pumped Raman fiber amplifier in accordance with a comparative example. Experimental setup 200 comprises signal generator 201, coupler 213, coupler 215, multiplexer 217, fiber facilities 205, Raman laser 203, optical power meter (OPM) 209, OPM 211, and optical spectrum analyzer (OSA) 207. Coupler 213 provides a portion (approximately 5%) of the generated power from signal generator 201 to OPM 209. Raman laser injects power at approximately 1469 nm through wavelength-division multiplexer (WDM) 217 to amplify the generated signal. The injected power from Raman laser 203 is measured by OPM 211 through coupler 215. The resulting signal is transmitted through fiber 205 and analyzed by OSA 207.

Experimental results from experimental setup 200 suggests that there are two approximate linear relationships between the input signal power variations and the required pump power adjustments for both forward-pumped RFA and backward-pumped RFA. (The two approximate linear relationships will be discussed.) Consequently, a dynamic gain control technique for both forward-pumped distributed/discrete RFA and backward-pumped discrete RFA allows the pump power adjustments to be completed in only one step within a very short period of time ($<< 1 \mu s$) while operating in an opened loop configuration. (Prior art methods based on a closed feedback loop typically need more than 3 steps to stabilize the gain.) For a forward-pumped distributed/discrete RFA, the present method allows the pump powers to be adjusted synchronously with the input signal power variation. (Prior art methods typically detect the output/backscattered signal variations and consequently require more time to stabilize the closed loop control.)

When a Raman fiber amplifier is used in a dynamic optical network, the pump power needs to be adjusted accordingly when the input signal power varies in order to maintain a constant gain. Experimental results from experimental setup 200 are indicative of a relationship between the required pump power adjustment and the input signal power variation in a forward-pumped RFA. Experimental setup 200 includes fiber facilities 205, which comprises approximately 77 km of standard single mode fiber (SSMF), which functions as the transmission fiber. Raman pump comprises Raman fiber laser 203 (1469 nm with 3 dB spectral width $\cong$ 1nm) and the signal is a narrow-band filtered ASE (amplified spontaneous emission) source (1580 nm with 3 dB spectral width $\cong$ 1nm). Both the input pump power and the input signal power are monitored by optical power meters 209 and 211 while the Raman gain is measured through OSA 207.

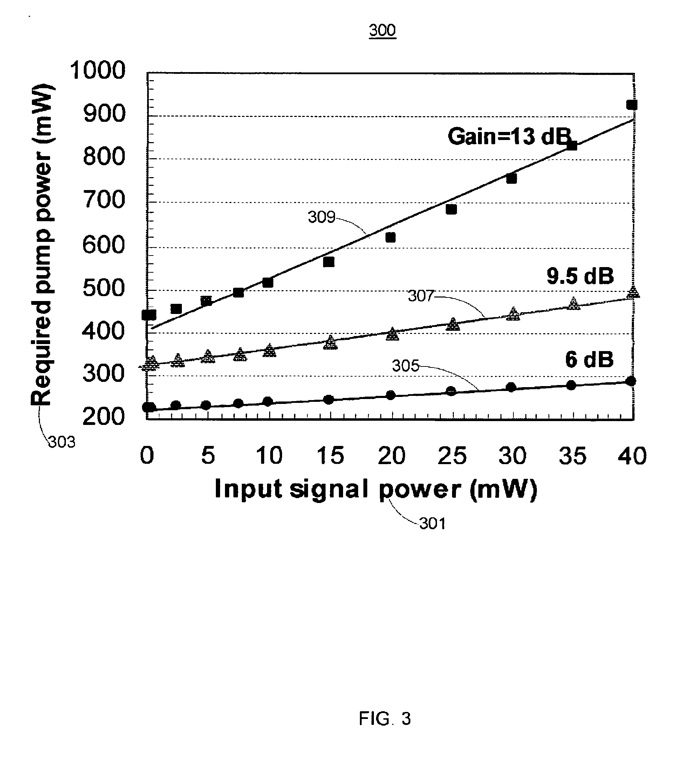

Figure 3 shows a function 300 in which Raman pump power in a linear scale is a function (relationship) of the input signal power in a linear scale for a forward-pumped Raman fiber amplifier. The required Raman pump power 303 as a function of the input signal power 301 (0.001 mW to 40mW) for various target Raman gains (6 dB, 9.5 dB and 13 dB) corresponding to plots 305, 307, and 309, respectively.

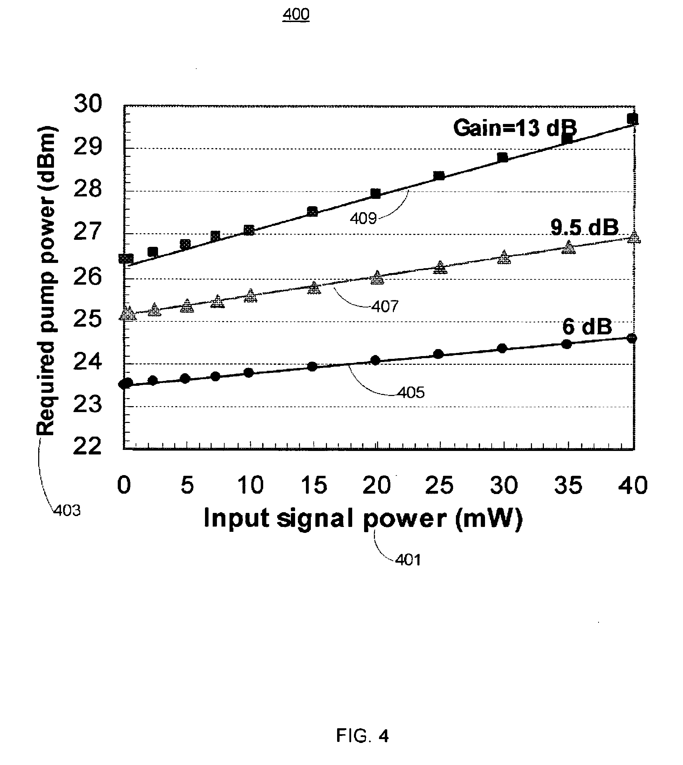

Figure 4 shows a function 400 (that is associated with function 300 as shown in Figure 3), in which Raman pump power 403 is shown in a decibel scale as a function of the input signal power 401 as shown in a linear scale for a forward-pumped Raman fiber amplifier. The required Raman pump power 403 as a function of the input signal power 401 (0.001 mW to 40mW) for various target various Raman gains (6 dB, 9.5 dB and 13 dB) corresponding to plots 405, 407, and 409, respectively.

As shown in Figures 3 and 4, input signal powers 301 and 401 are shown in linear scale. One observes that the required pump power 303 is described by an approximate linear function of the input signal power 301 if the Raman gain is not substantially large as shown in Figure 3. If one expresses the required pump power in a decibel scale (as shown in Figure 4) while maintaining the input signal power in a linear scale, the linear relationship (corresponding to plots 405, 407, and 409) appears to hold not only for a relatively small Raman gain but also appears to hold for a relatively large Raman gain (as high as 13 dB).

In experimental setup 200 only one Raman pump and one signal are considered. However, one may utilize linear relationships (similar to the two linear relations as shown in Figures 3 and 4) for a forward-pumped RFA with multiple signals and multiple Raman pumps as long as the Raman interactions between pump and pump, between pump and signal, and between signal and signal are not too strong (the underlying reason is due to the same nature of the three Raman interactions).

In the following discussion, one assumes that there are M Raman pumps and N signal channels. In an embodiment of the invention, the N signals are partitioned into K wavelength regions. In an embodiment of the invention, one selects one of two approximate linear functions describing the relationship between the required individual pump power adjustments (relative to a reference point, e.g., half-load with uniform channel pattern) and the input signal power variations in the K wavelength regions. The two approximate linear functions (relationships) are then given by:

$$\Delta P_L(j) \approx \sum_{k=1}^{K} T_{LL}(j,k)\Delta S_L(k) \qquad \text{(EQ. 1)}$$

$$\Delta P_d(j) \approx \sum_{k=1}^{K} T_{dL}(j,k)\Delta S_L(k) \qquad \text{(EQ. 2)}$$

where $\Delta P_L(j)$, $\Delta P_d(j)$ denote the required power adjustment of the $j$th pump in linear scale and in decibel scale, respectively, and $\Delta S_L(k)$ denote the input signal power variation in linear scale in the $k$th wavelength region. For a specific target Raman gain profile, the linear coefficient $T_{LL}(j,k)$ and $T_{dL}(j,k)$ uniquely depend on the passive optical link parameters such as fiber length, fiber loss and Raman gain coefficient, and therefore can be predetermined either by direct measurement or by numerical simulation using the measured basic optical link parameters.

Numerical results suggest that EQ. 1 and EQ. 2 both hold if the target Raman gain is relatively small. With the increase of the target Raman gain it appears that EQ. 2 is preferable to describe the relationship between the required pump power adjustments and the input signal power variations, which agrees with experiments (as supported by experimental setup 200) in the case with only one pump and one signal.

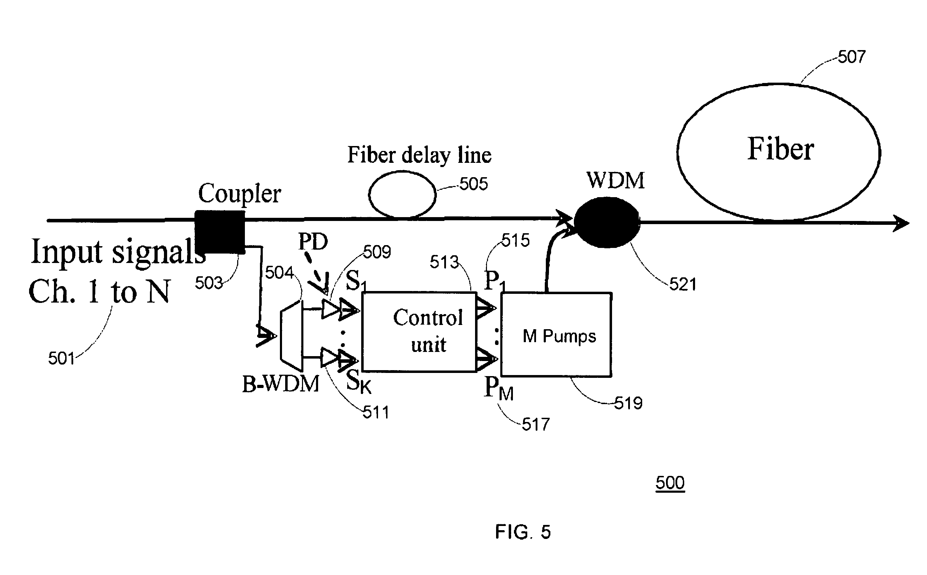

Figure 5 shows a dynamic gain control circuit 500 for a forward-pumped Raman fiber amplifier. Dynamic gain control circuit 500 utilizes linear functions EQ. 1 or EQ. 2 as a deterministic control algorithm for a forward-pumped Raman fiber amplifier (RFA). Dynamic gain control circuit 500 comprises coupler 503, which couples input signals 501 to fiber delay line 505. A small part of the input signal power is coupled out (to monitor the input signal power variations) before it enters into the transmission fiber 507, which is partitioned into K wavelength regions by a 1×K band wavelength-division multiplexer (B-WDM) 504. (Alternatively, the embodiment may use a 1×K power splitter followed by K parallel bandpass filters.) The optical powers in the K wavelength regions (detected by K parallel photodetectors (PDs) 509-511) are used as the input parameters to control unit 513, which generates the required output pump powers 515-517 of the M Raman pumps 519 deterministically through a simple linear function calculations (either EQ. 1 or EQ. 2). Because the control algorithm (EQ. 1 or EQ. 2) is direct using an opened feedback loop configuration, the embodiment allows the pump power adjustments to be completed in only one step within a very short period of time (<< 1 μs even for a common DSP). M Raman pumps 519 inject power into transmission fiber 507 through WDM 521.

While dynamic gain control circuit 500 shows only one amplifier stage, embodiments of the invention may support a plurality of amplifier stages, each amplifier stage being geographically located along a fiber optic transmission facility and designed in accordance with EQ. 1 or EQ. 2. Each amplifier stage may include forward-pumped RFA's, backward-pumped RFA's, or a combination of forward-pumped RFA's and backward-pumped RFA's.

By introducing a short delay between the transmission branch and the control branch with fiber delay line 505, one also allows the powers of the pump to be adjusted synchronously with the input signal power. The introduced delay by fiber delay line 505 is approximately equal to the time delay introduced by de-multiplexer 504, photodiodes 509-511, control unit 513, and pumps 519. As a result, the control technique is typically faster (sub-μs) than control techniques supported in the prior art (sub-ms).

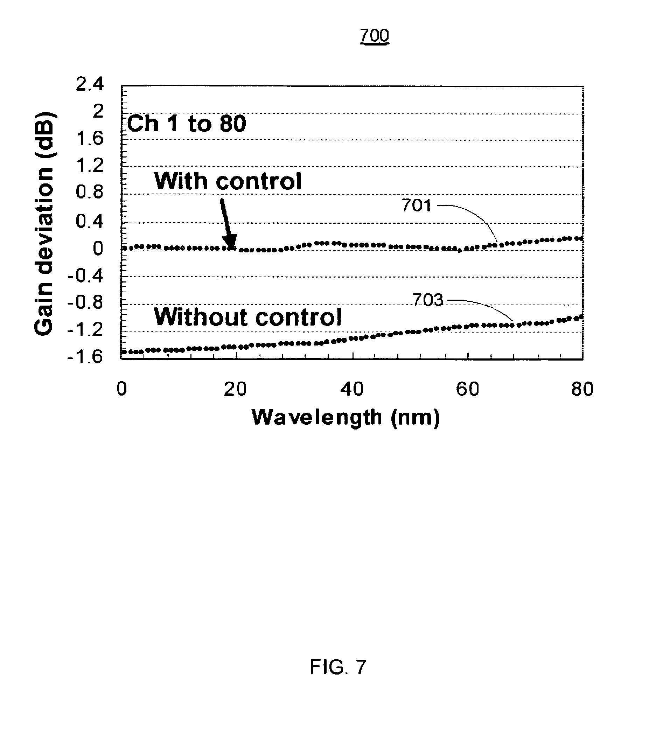

Linear coefficient $T_{dL}(j,k)$, which is contained in EQ. 2, may be determined by the following procedure for a 80-channel WDM system. We assume that K=2 and we use half load with uniform channel patterns (1, 3, ...79) as the reference point. First, only input signals at channels 41, 43 to 79 are configured and the corresponding required pump power adjustment $\Delta P_d(j)$ is found. $T_{dL}(j,1)$ is then given by $\Delta P_d(j)/\Delta S_L(1)$ due to the observation that $\Delta S_L(2) = 0$. Second, only input signals at channel 1, 3 and 39 are configured and corresponding required pump power adjustment $\Delta P_d(j)$ is found. $T_{dL}(j,2)$ is then given by $\Delta P_d(j)/\Delta S_L(2)$ due to the observation that $\Delta S_L(1) = 0$. The same process is also applicable for the case with K>2 or K=1. From Figures 7-14 one observes that the amplifier, as shown in Figure 5, has the capability to suppress the Raman gain deviation of the surviving channel to be below 0.2 dB for a wide range of input signal spectral patterns. Without using gain control, however, the Raman gain deviation of the surviving channel can be as high as 2 dB with only one surviving channel and as high as -1.6 dB with full 80 channels.

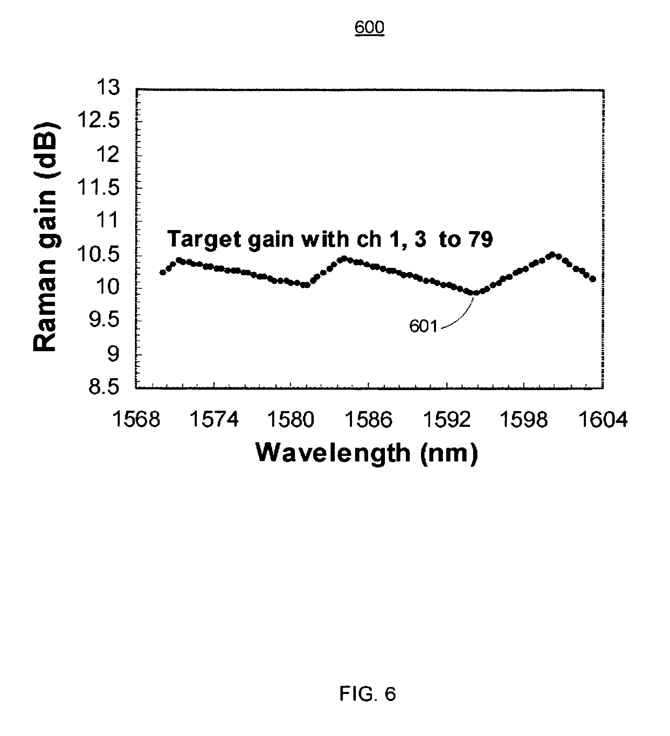

Figure 6 shows a target Raman fiber amplifier gain profile 600 suitable for use in accordance with an embodiment of the invention. The chosen reference operation point is with half-load (40 channels) and uniform channel distribution (1,3,5,...79). As shown in Figure 6, the Raman gain includes both the gain from the Raman pumps and the gain from the other signals. Choosing half load as the reference point is preferable to the commonly used reference point with full load because it allows the required maximum pump power adjustment to be reduced by half.

Figure 7 shows a first example 700 that compares gain deviation with and without dynamic gain control with 80 active channels.

As previously discussed, Figures 7-14 (which show the simulated signal gain deviation of the surviving channel for a 50 GHz-spaced 80-channel L-band WDM system with a four-wavelength (1458, 1469, 1483 and 1503 nm) forward-pumped RFA) demonstrate the effectiveness of the amplifier shown in Figure 5. The linear function (EQ. 2) is used as the control algorithm in the control unit. As a comparison, the signal gain deviation without gain control is also illustrated in Figures 7-14. 80 km of SSMF is used as the transmission fiber and the input signal power is chosen to be $500\,\mu W$/channel (-3dBm/channel). The tapped signal is divided into two wavelength regions (i.e., K=2), 1570-1584 nm, and 1584 to 1604 nm.

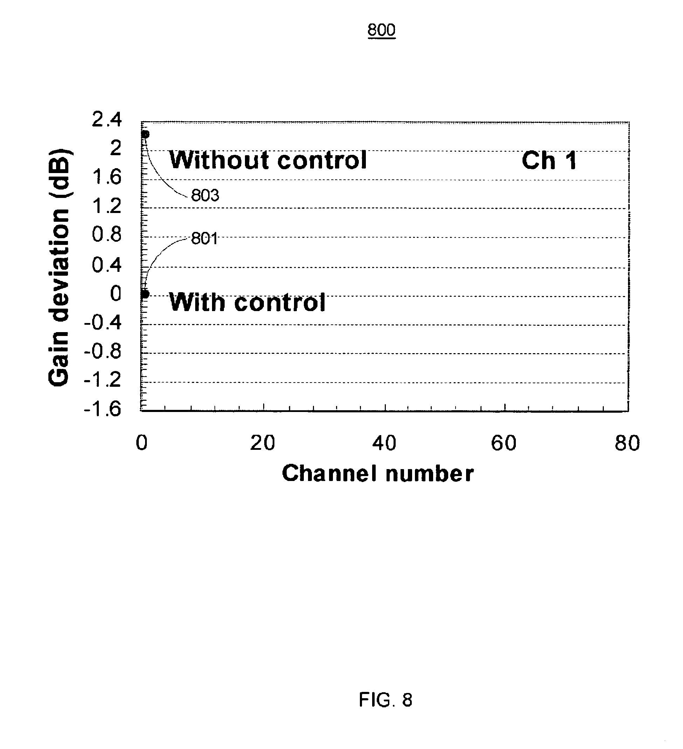

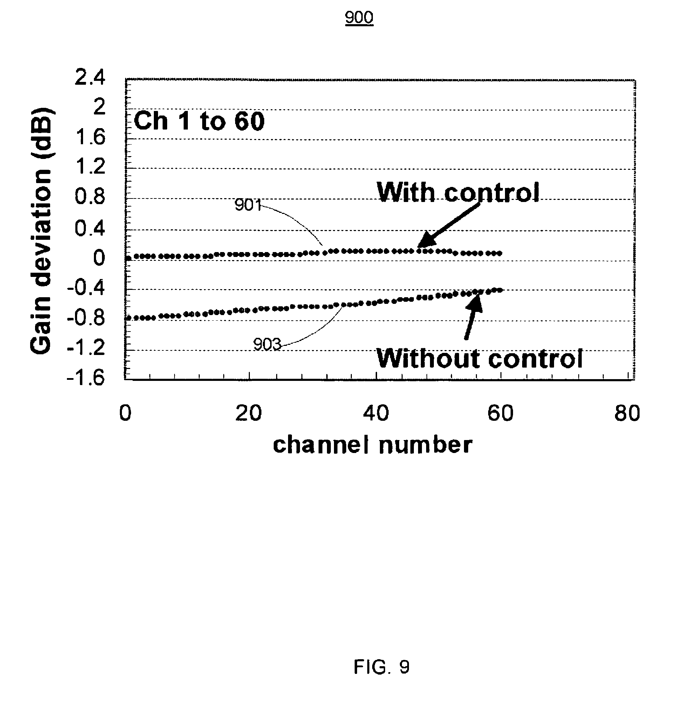

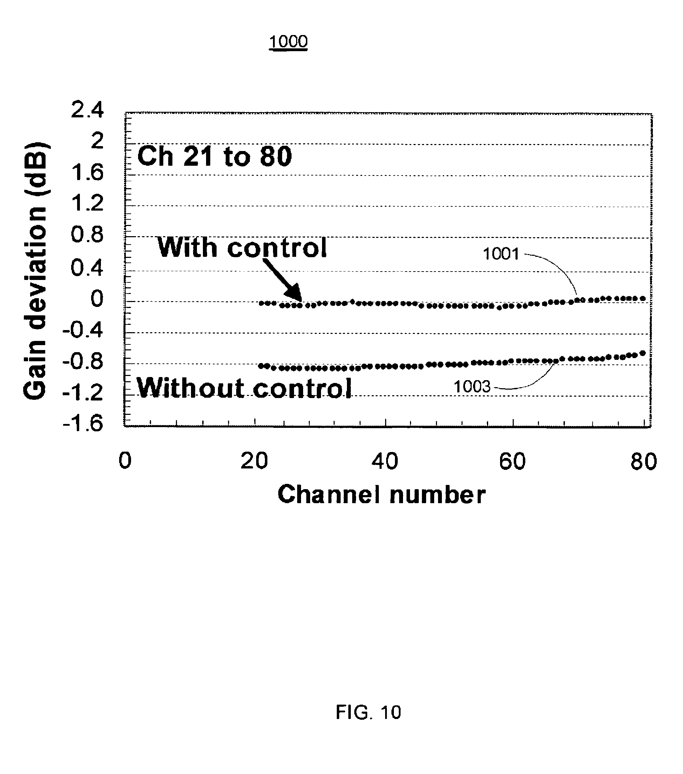

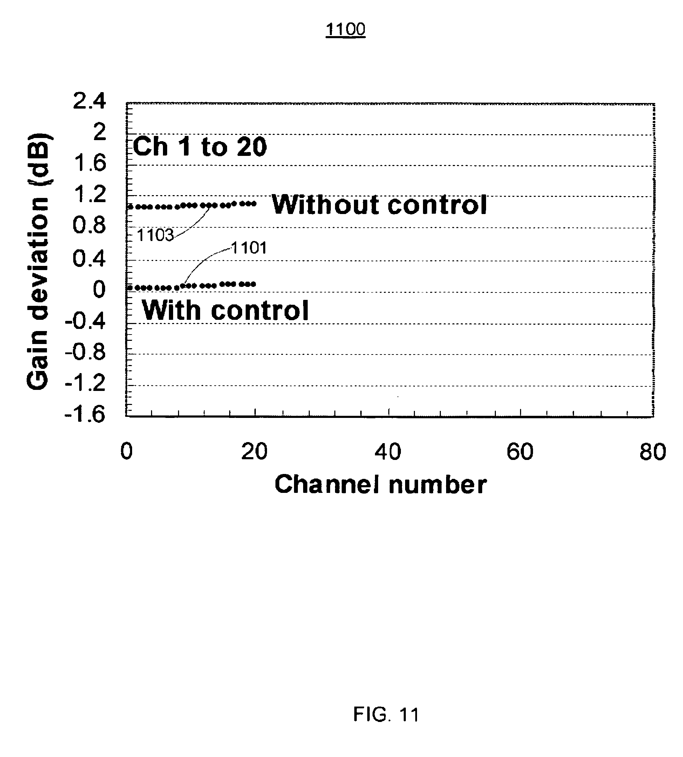

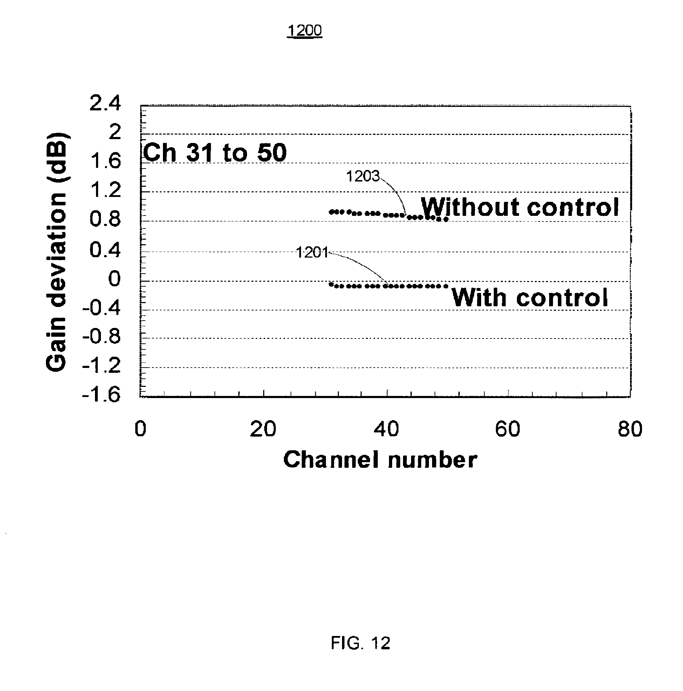

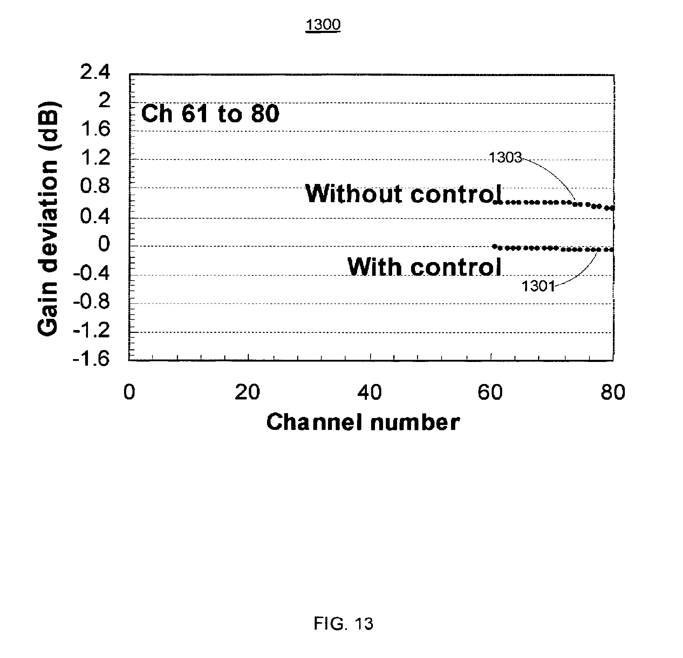

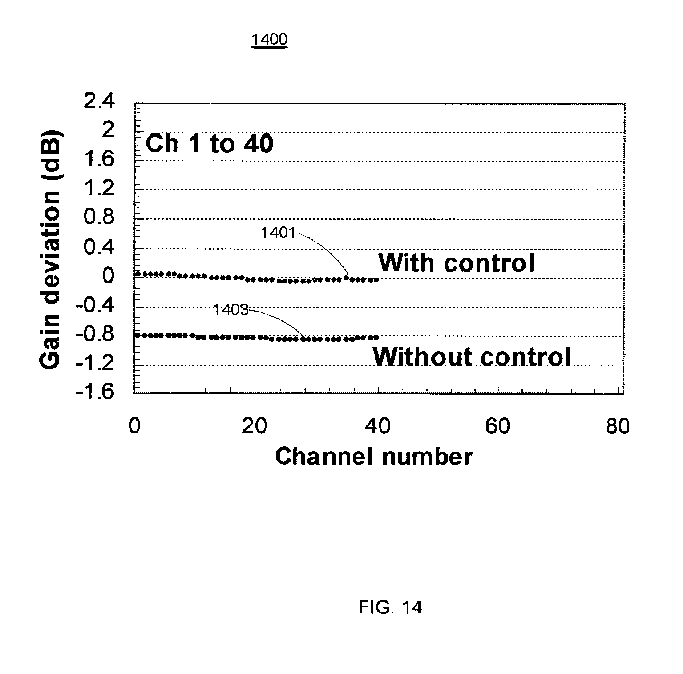

Figure 8 shows a second example 800 that compares gain deviation with and without dynamic gain control with 1 active channel. Figure 9 shows a third example 900 with 60 active channels. Figure 10 shows a fourth example 1000 with channels 21-80 active. Figure 11 shows a fifth example 1100 with 20 active channels. Figure 12 shows a sixth example 1200 with channels 31-50 active. Figure 13 shows a seventh example 1300 with channels 61-80 active. Figure 14 shows an eighth example 1400 with 40 active channels. The above examples demonstrate the effectiveness of the amplifier shown in Figure 5.

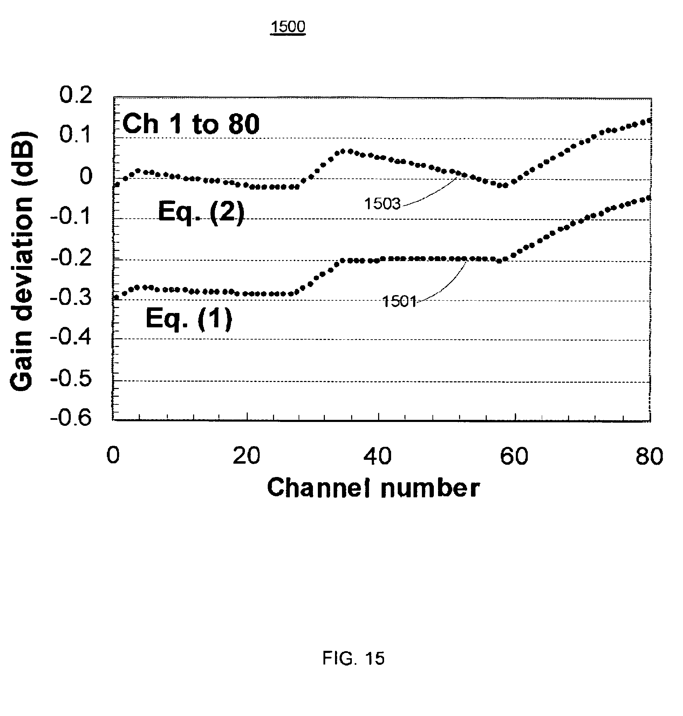

Figure 15 shows a plot 1500 comparing two control schemes with all channels (1-80) active. One observes that, while both schemes have the capability to suppress the signal gain deviation effectively (peak gain deviation is suppressed from -1.6 dB to 0.15dB by using EQ. 2, and from -1.6 dB to -0.3 dB by using EQ. 1), the algorithm based on EQ. 2 appears to be better than the algorithm based on EQ. 1. This observation is due to the fact the target Raman gain ($10.2 \pm 0.3$ dB) is not sufficiently small. Simulations were performed to investigate the impact of K on the performance of dynamic gain control. Numerical results suggest that, for a purely L-band/C-band system, K=2 is a preferable choice, because a further increase of K only gives minor performance improvement but may increase cost considerably. On the contrary, choosing K=1 is acceptable depending on the system requirement - the peak gain deviation can be suppressed to be below 0.3 dB with K=1 while can be suppressed to be below 0.2 dB with K=2 for this specific WDM system. If one chooses K=1, the dynamic gain control circuit can be simplified with respect to apparatus 500 as shown in Figure 5. The above investigations are based on a distributed RFA, although a similar approach is also applicable to a discrete RFA, in which only the fiber length and fiber type are different.

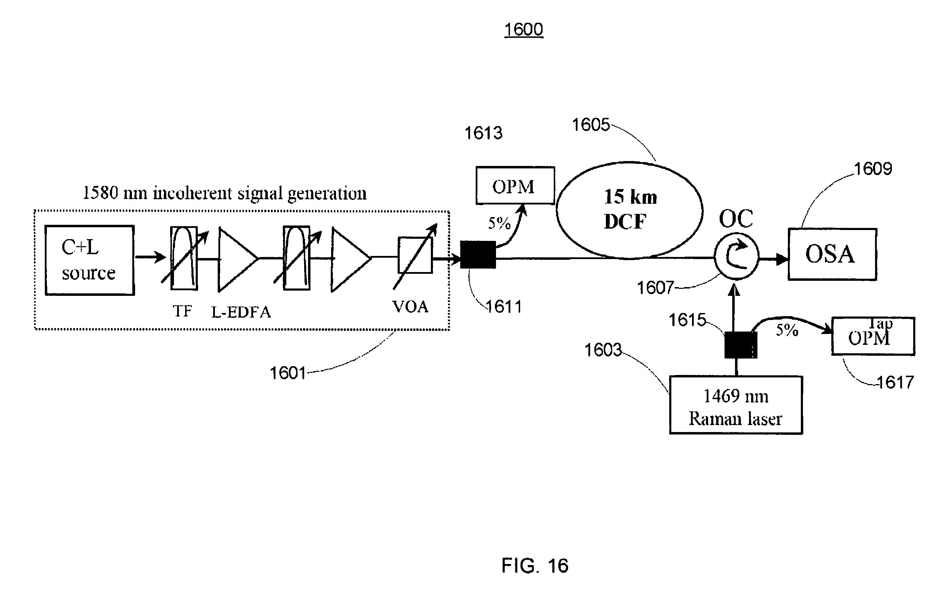

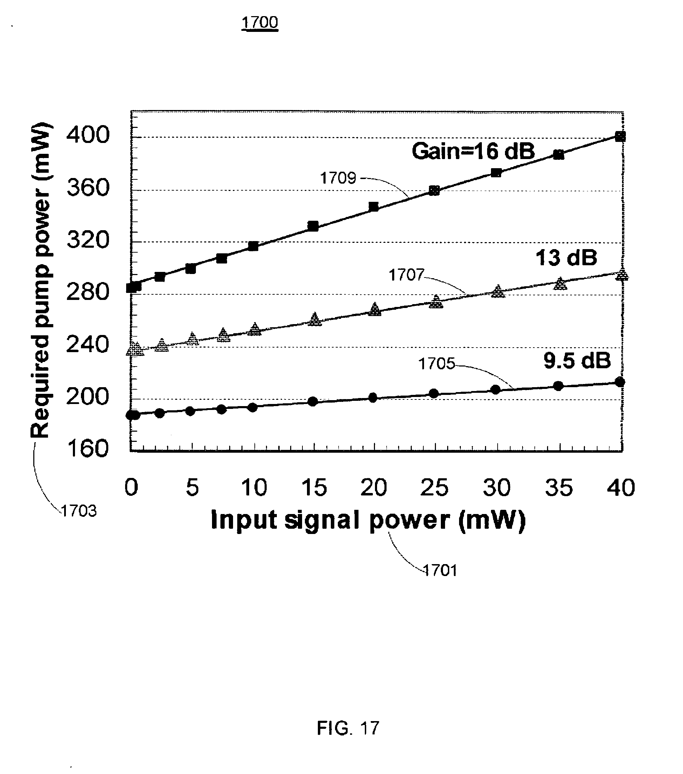

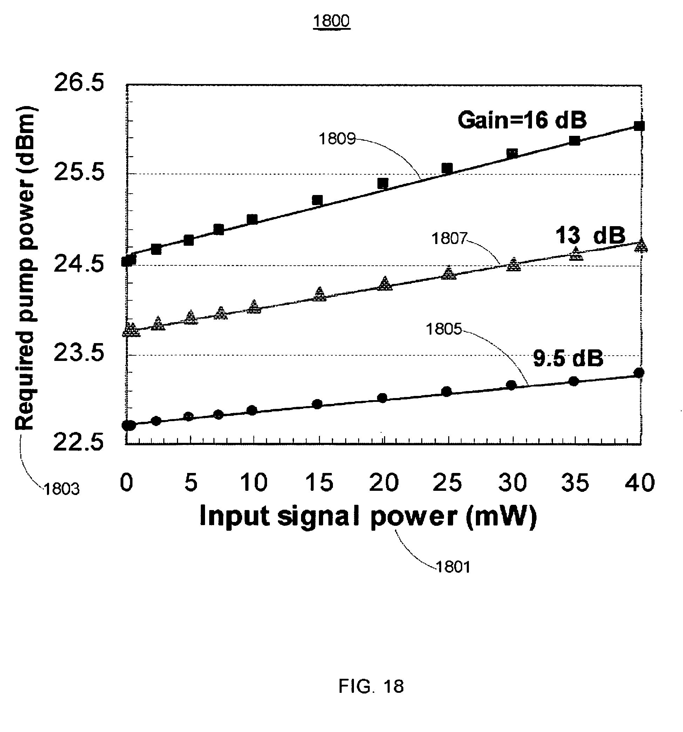

Figure 16 shows an experimental setup 1600 for a backward-pumped Raman fiber amplifier for investigating the relationship between the required pump power adjustment and the input signal power variation in accordance with an embodiment of the invention. Experimental results suggest a similar linear relationship (as shown in Figures 17 and 18) for a backward-pumped RFA as for a forward-pumped RFA (as previously discussed with Figures 3 and 4).

Figure 17 shows a function 1700 in which Raman pump power in a linear scale is a function of the input signal power in a linear scale for a backward-pumped Raman fiber amplifier in accordance with an embodiment of the invention. Figure 18 shows a function 1800 in which Raman pump power in a decibel scale is a function of the input signal power in a linear scale for a backward-pumped Raman fiber amplifier in accordance with an embodiment of the invention.

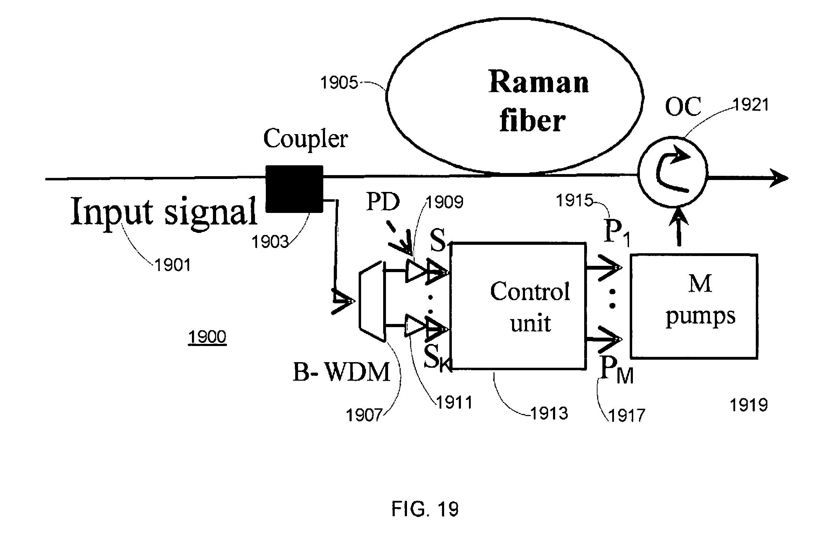

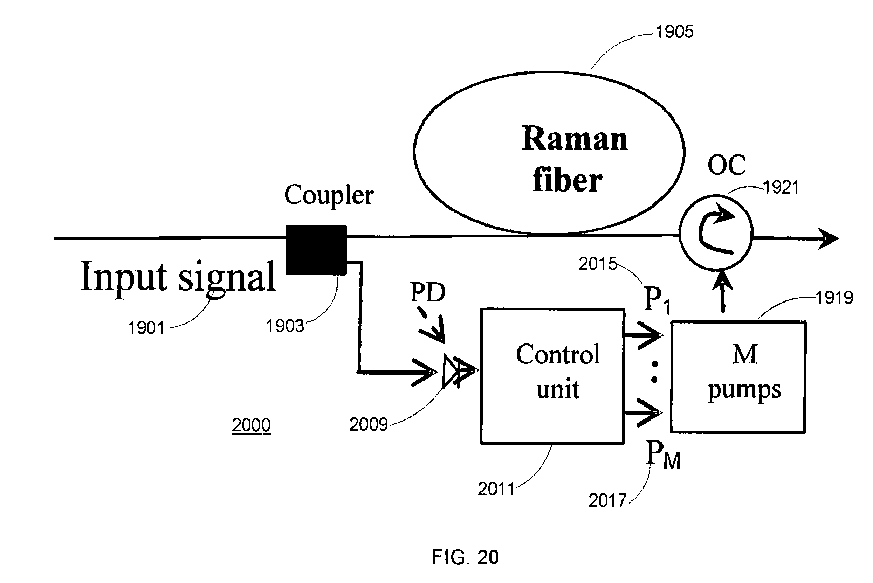

As with a forward pumped RFA, an embodiment of the invention utilizes one of two approximate linear relationships between the input signal power variations and the required pump power adjustments for the backward-pumped RFA's that are shown in Figures 19 and 20. Moreover, the linear relations are relations that are applicable to fiber systems that utilize both a forward-pumped RFA as well as a backward-pumped RFA.

Embodiments of the invention are not limited to control schemes that utilize linear functions corresponding to EQ. 1 or EQ. 2. Other complicated functions (linear or nonlinear) that relate the input signal power variations directly to the required pump power adjustments are also applicable. As an example, the input signal power variations can be separated into several power regions. Within each region, linear function (EQ. 1) or (EQ. 2) is used to connect the required pump power adjustment to the input signal power variation, but the linear coefficients are allowed to be different between different power regions. A corresponding control algorithm may provide a better gain deviation suppression but at the cost of control speed and complexity.

Figure 19 shows a backward-pumped Raman fiber amplifier 1900. RFA 1900 incorporates a dynamic gain control circuit using EQ. 1 or EQ. 2 as the deterministic control algorithm for a backward-pumped discrete RFA is shown in Figure 19. (RFA 2000 is the simplified version for the case when K=1, where the Raman fiber can be a conventional DCF or some special high nonlinear fiber.) Because a discrete RFA has much shorter fiber length than a distributed RFA, the gain transients experienced by a backward-pumped discrete RFA during channel add/drop can be significantly faster than a backward-pumped distributed RFA. Due to its deterministic nature (one-step), typically the control circuits shown in Figures 19 and 20 are inherently faster than the conventional methods based on a closed feedback loop, which usually needs several control cycles to stabilize the signal gain. With an embodiment of the invention, the control speed can be further improved by adding a proper electrical delay inside the control circuit to optimize the timing of the required pump power adjustment relative to the input signal power variation. As for the control algorithm, one observes that the algorithm based on EQ. 1 typically performs better than the algorithm based on EQ. 2 as illustrated by Figures 17 and 18. This observation is different from a forward-pumped RFA, where EQ. 2 typically performs better than EQ. 1. The underlying reason is due to the observation that pump depletion for a backward-pumped RFA occurs mostly close to the fiber end; therefore, exponential fiber loss plays a much less important role in the pump depletion than a forward-pumped Raman amplifier, in which the pump depletion occurs in a much longer fiber length.

Referring to Figure 19, a portion of the input power from input signal 1901 is provided by coupler 1903 to B-WDM 1907. Photodiodes 1909-1911 measure input power variations (PD) for each of the K wavelength regions. Control unit 1913 determines the pump power adjustments 1915-1917 using either EQ. 1 or EQ. 2. M pumps 1919 inject power into Raman fiber 1905 in the backward direction through optical circulator (OC) 1921.

Backward-pumped Raman fiber amplifier 2000, as shown in Figure 20, is similar to backward-pumped Raman fiber amplifier 1900; however, with backward-pumped Raman fiber amplifier 2000, K=1 (i.e., there is one wavelength region). Consequently, control unit 2013 processes the input power variation (PD) for one wavelength region through photodiode 2009. Control unit 2013 controls M pumps 1919 by providing the pump power adjustments 2015-2017 to M pumps 1919.

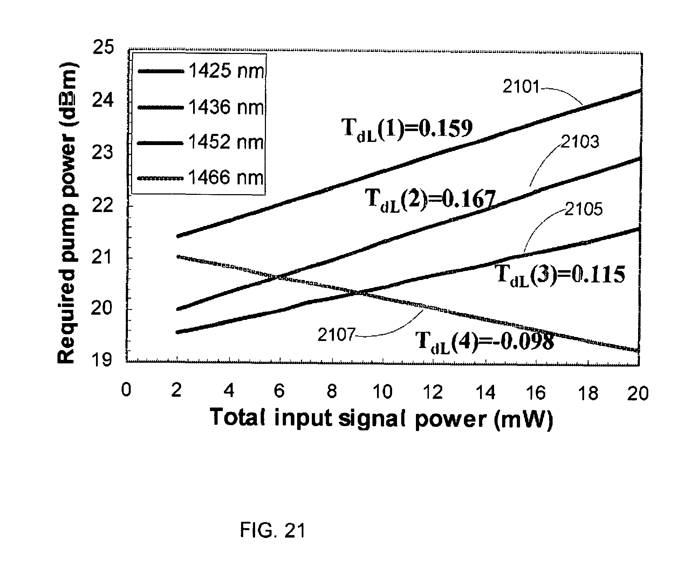

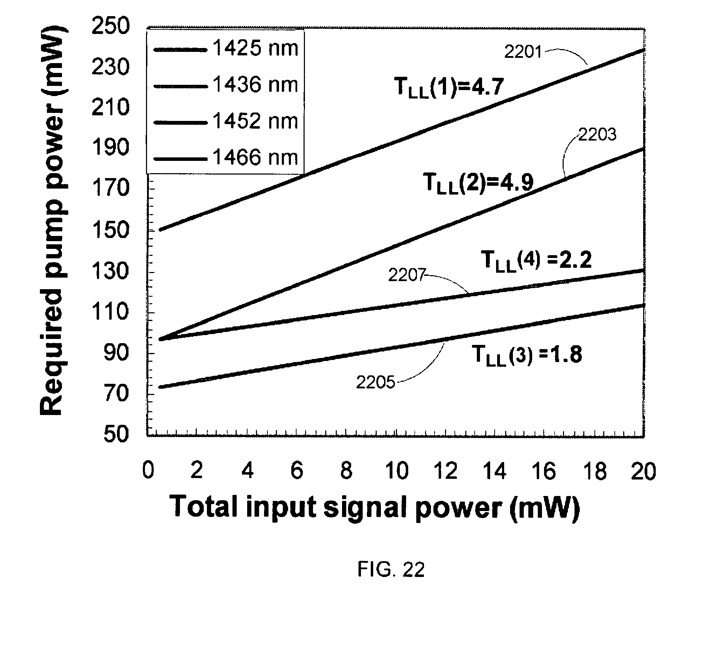

Figures 21 and 22 provide examples that illustrate the above discussion. Figure 21 illustrates an example of dynamic gain control for a forward-pumped Raman fiber amplifier in accordance with an embodiment of the invention. The following linear functions are used:

$$P_L(j,t) \approx P_{L0}(j) + \sum_{k=1}^{K} T_{LL}(j,k)\big[S_L(k,t) - S_{L0}(k)\big] \qquad \text{EQ. 3}$$

$$P_d(j,t) \approx P_{d0}(j) + \sum_{k=1}^{K} T_{dL}(j,k)\big[S_L(k,t) - S_{L0}(k)\big] \qquad \text{EQ. 4}$$

where $P_L(j,t)$ denotes the required pump power in the linear unit of the $j^{th}$ pump at time instant $t$, $S_L(k,t)$ denotes the detected input signal power in the $k^{th}$ wavelength region also in the linear unit. $S_{L0}(k)$ and $P_{L0}(j)$ denotes the corresponding input signal power and pump power at the reference operation point. The subscript L and d in EQ. 3 and EQ. 4 denote linear scale and logarithmic scale, respectively. EQ. 4 appears to be preferable for a forward-pumped Raman fiber amplifier.

In the example shown in Figure 21, K=1, corresponding to a four-wavelength forward-pumped Raman fiber amplifier with 80 km of TW-Reach transmission fiber functions as the gain medium. The pump wavelengths are 1425, 1436, 1452 and 1466 nm. Full load (which is referred as the reference point) is configured as: 40 channel 100 GHz-spaced C-band signal, 1530 nm to 1561 nm, 500$\mu$W/channel (-3 dBm/channel) input signal power, and a target Raman gain of 14$\pm$0.6 dB across the C-band.

The example utilizes the following linear control equation:

$$P_d(j,t) \approx P_{d0}(j) + T_{dL}(j)\big[S_L(t) - S_0\big] \ \text{ where } j = 1,2,3,4 \qquad \text{EQ. 5}$$

where $P_{d0}(1)$=269mW (24.3 dBm), $P_{d0}(2)$=200mW (23.0 dBm), $P_{d0}(3)$=145mW (21.63 dBm), and $P_{d0}(4)$=85mW (19.3dBm) and $S_0$=20 mW.

Referring to Figure 21, plot 2101 corresponds to the first pump (1425 nm), plot 2103 corresponds to the second pump (1436 nm), plot 2105 corresponds to the third pump (1452 nm), and plot 2107 corresponds to the fourth pump (1466 nm). The linear coefficients $T_{dL}(1)$, $T_{dL}(2)$, $T_{dL}(3)$, and $T_{dL}(4)$ are determined to be 0.159, 0.167, 0.115, and 0.098, respectively.

Figure 22 illustrates an example of dynamic gain control for a backward-pumped Raman fiber amplifier in accordance with an embodiment of the invention. The following dynamic control equations are used:

$$P_L(j,t) \approx P_{L0}(j) + \sum_{k=1}^{K} T_{LL}(j,k)[S_L(k,t-T) - S_{L0}(k)] \qquad \text{EQ. 6}$$

$$P_d(j,t) \approx P_{d0}(j) + \sum_{k=1}^{K} T_{dL}(j,k)[S_L(k,t-T) - S_{L0}(k)] \qquad \text{EQ. 7}$$

where $P_L(j,t)$ denotes the required pump power in the linear unit of the $j^{th}$ pump at time instant $t$, $S_L(k,t)$ denotes the detected input signal power in the $k^{th}$ wavelength region also in the linear unit. $S_{L0}(k)$ and $P_{L0}(J)$ denotes the corresponding input signal power and pump power at the reference operation point. T denotes the introduced time delay between the pump power adjustment and the input signal power variation, roughly equal to the propagation time of the signal in the fiber. The subscript L and d in EQ. 6 and EQ. 7 denote linear scale and logarithmic scale, respectively. EQ. 6 appears to be preferable for a backward-pumped Raman fiber amplifier.

In the example shown in Figure 22, K=1. The example corresponds to a four-wavelength backward-pumped discrete Raman fiber amplifier with 12 km of dispersion compensating fiber as the gain medium. The pump wavelengths are 1425, 1436, 1452 and 1466 nm. Full load (referred as the reference point) is configured as: 40 channel 100 GHz-spaced C-band signal, 1530 to 1561 nm, 500µW/channel (-3 dBm/channel) input signal power. The target Raman gain is 16±0.6 dB across the C-band.

The example uses the following linear control equation:

$$P_L(j,t) \approx P_{L0}(j) + T_{LL}(j)[S_L(t) - S_0] \quad j = 1,2,3,4 \qquad \text{EQ. 7}$$

where $P_{L0}(1)$=246 mW, $P_{L0}(2)$=197.2 mW, $P_{L0}(3)$=122 mW, and $P_{L0}(4)$=140.6 mW $S_{L0}$ =20 mW

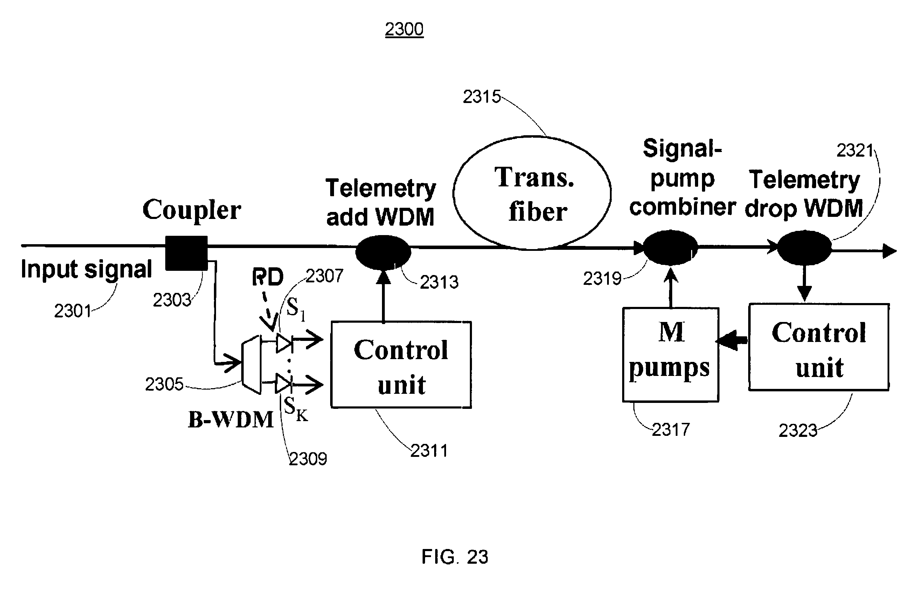

Figure 23 shows a backward-pumped Raman fiber amplifier in accordance with an embodiment of the invention. Apparatus 2300 supports a geographical separation of the detection of the input power variation (determined by coupler 2303, B-WDM 2305, photodiodes 2307-2309, control unit 2311) and the injection of power by M pumps 2317. In the embodiment shown in Figure 23, a portion of power from input signal 2301 is coupled by coupler 2303 into B-WDM 2305 and processed by control unit 2311. Because M pumps 2317 are geographically separated from control unit 2311, control information from control unit 2311 to control unit 2323 is sent over a telemetry channel using transmission fiber 2315, WDM 2313 and WDM 2321. (Transmission fiber 2315 also supports transmission of the optical signal channels.) The telemetry channel may be the conventional optical supervisory channel that is already used in most of the commercial WDM system. Using the control information, control unit 2323 adjusts the injected power of M pumps 2317 into combiner 2319. One of the following dynamic control functions is used in designing the backward-pumped Raman amplifier shown in Figure 23.

$$P_L(j,t) \approx P_{L0}(j) + \sum_{k=1}^{K} T_{LL}(j,k)[S_L(k,t-T) - S_{L0}(k)] \qquad \text{EQ. 9}$$

$$P_d(j,t) \approx P_{d0}(j) + \sum_{k=1}^{K} T_{dL}(j,k)[S_L(k,t-T) - S_{L0}(k)] \qquad \text{EQ. 10}$$

where $P_L(j,t)$ denotes the required pump power in the linear unit of the $j^{th}$ pump at time instant $t$, $S_L(k,t)$ denotes the detected input signal power in the $k^{th}$ wavelength region also in linear units. $S_{L0}(K)$ and $P_{L0}(j)$ denotes the corresponding input signal power and the pump power at the reference operation point. T denotes the introduced time delay between the pump power adjustment and the input signal power variation, roughly equal to the propagation time of the signal in the transmission fiber. The subscript L and d in EQ. 9 and EQ. 10 denote linear scale and logarithmic scale, respectively. EQ. 9 provides performance that is preferable for a backward-pumped Raman fiber amplifier.

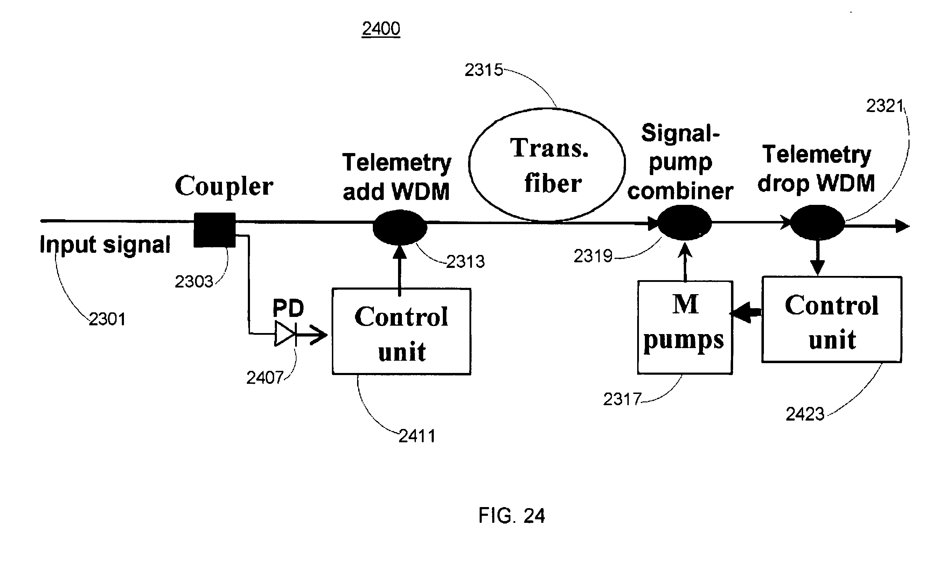

Figure 24 shows a backward-pumped Raman fiber amplifier in accordance with an embodiment of the invention. Apparatus 2400 is similar to apparatus 2300; however, K=1. Consequently, only one photodiode (photodiode 2407) is needed to detect input power variations (PD). Control unit 2411 processes the detected input power variations in accordance with either EQ. 11 or EQ. 12 and sends control information to control unit 2423 over a telemetry channel on transmission fiber 2315.

$$P_L(j,t) \approx P_{L0}(j) + T_{LL}(j)[S_L(t-T) - S_{L0}] \qquad \text{EQ. 11}$$

$$P_d(j,t) \approx P_{d0}(j) + T_{dL}(j)[S_L(t-T) - S_{L0}] \qquad \text{EQ. 12}$$

EQ. 11 provides performance that is preferable with respect to EQ. 12 for a backward-pumped Raman fiber amplifier.

Embodiments of the invention support dynamic control of both a forward-pumped RFA and a backward-pumped RFA in an optical fiber system and Erbium doped fiber or waveguide amplifiers.

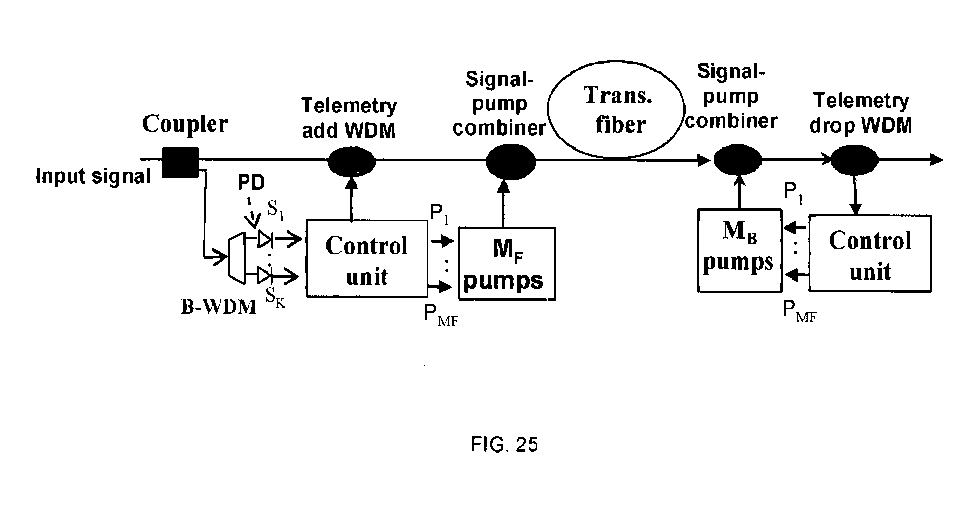

Figure 25 shows an optical fiber system that utilizes dynamic control for both a forward-pumped Raman fiber amplifier and a backward Raman fiber amplifier. One of the following two gain control functions is selected to control the gain of the forward-pumped Raman amplifier:

$$P_L^F(j,t) \approx P_{L0}(j) + \sum_{k=1}^{K} T_{LL}^F(j,k)[S_L(k,t) - S_{L0}(k)] \qquad \text{EQ. 13}$$

$$P_d^F(j,t) \approx P_{d0}(j) + \sum_{k=1}^{K} T_{dL}^F(j,k)[S_L(k,t) - S_{L0}(k)] \qquad \text{EQ. 14}$$

Additionally, one of the following two gain control functions is selected to control the gain of the backward-pumped Raman amplifier:

$$P_L^B(j,t) \approx P_{L0}^B(j) + \sum_{k=1}^{K} T_{LL}^B(j,k)[S_L(k,t-T) - S_{L0}(k)] \qquad \text{EQ. 15}$$

$$P_d^B(j,t) \approx P_{d0}^B(j) + \sum_{k=1}^{K} T_{dL}^B(j,k)[S_L(k,t-T) - S_{L0}(k)] \qquad \text{EQ. 16}$$

where $P_L^F(j,t)$ denotes the required pump power in the linear unit of the $j^{th}$ forward pump at time instant t, $S_L(k,t)$ denotes the detected input signal power in the $k^{th}$ wavelength region also in the linear unit. $S_{L0}(k)$ and $P_{L0}^F(j)$ denotes the corresponding input signal power and forward pump power at the reference operation point. The subscript L and d in EQ. 13, EQ. 14, EQ. 15, and EQ. 16 denote a linear scale and a logarithmic scale. The superscript F and B denote the forward Raman pump and the backward Raman pump. T is the propagation time of the optical signal in the transmission fiber. EQ. 14 is preferable for the forward-pumped Raman pumps, and EQ. 15 is preferable for the backward Raman pumps. In addition, one can use an optical supervisory channel as the telemetry channel to send the input signal power information to the backward Raman pump control unit.

For a WDM system using both forward-pumped distributed Raman fiber amplifier and backward-pumped distributed Raman fiber amplifier as discussed above, the total Raman gain comes from three different sources: from the forward Raman pumps through signal-forward Raman pump interactions, from the other signals through signal-signal Raman interactions, and from the backward Raman pumps through signal-backward Raman pump interactions. Because the typical effective Raman interaction length is smaller than 40 km and a bi-directional-pumped Raman amplifier is necessary only when the span length is large (typically greater than 80 km). This implies that the gain due to the co-propagating forward Raman pumps and the gain due to the co-propagating other signal mainly comes from the first 40 km and the Raman gain due to the backward Raman pumps mainly comes form the final 40 km. As a result, one can treat a bidirectional-pumped distributed Raman amplifier as two separate amplifiers: a forward-pumped Raman amplifier followed by a backward-pumped Raman amplifier. The control equations EQ. 13 or EQ. 14 is used to control fast gain transient (sub-us) due to co-propagating signal-forward pump interactions and signal-signal Raman interactions while the control equation EQ. 15 and EQ. 16 is used to control relatively slow gain transient (sub-ms) due to signal-backward pump interactions. The control coefficients for both the forward-pumped Raman amplifier and the backward-pumped Raman amplifier can be predetermined either by numerical calculation using the measured basic fiber link parameters or by direct measurement using K predetermined input channel patterns as follows. First, one disables all the backward Raman pumps. For each of the K input patterns, one calculates or measures the required power adjustments of each of the $M_F$ forward Raman pumps based on a target forward Raman gain profile (include both the gain from the forward Raman pumps and the gain from the signal-signal Raman interaction). The sets of control coefficients for the forward-pumped Raman amplifier can then be obtained by substituting the measured individual forward pump power adjustments in accordance with the K channel patterns into EQ. 13 or EQ. 14. Second, one turns on both the forward Raman pumps and the backward Raman pumps. For each of the K channel patterns, one first adjusts the forward pump powers (already known from the first step), and then one measures the required power adjustment of each of the $M_B$ backward Raman pumps based on the total target Raman gain profile which includes the gain from the forward Raman pumps, from the signal-signal Raman interaction and from the backward Raman pumps. Substituting the measured individual backward pump power adjustments in accordance with the K channel patterns into EQ. 15 or EQ. 16, one then obtains the sets of control coefficients for the backward-pumped Raman amplifier.

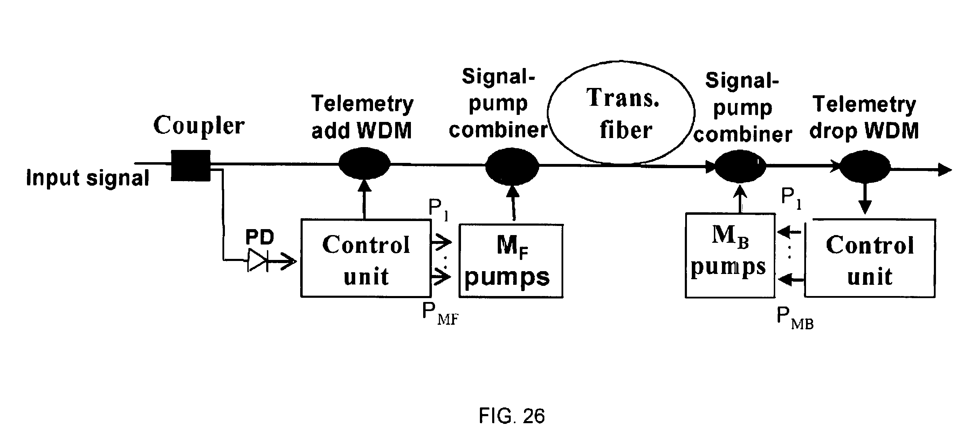

Figure 26 shows an optical fiber system that utilizes dynamic control for both a forward-pumped Raman fiber amplifier and a backward Raman fiber amplifier. The optical fiber system is similar to the optical fiber system as shown in Figure 25; however, the number of wavelength regions is one (i.e., K=1).

Embodiments of the invention also support gain control for a conventional EDFA/EDWA amplifier, which can be viewed as a variant of the discrete Raman amplifier.

Finally, one observes that, if the transmission fiber is replaced by an Erbium doped fiber/waveguide, and the pump wavelength are chosen to be 980 nm and/or 1480 nm, the above considerations are also applicable to the dynamic gain control for an Erbium-doped fibber/waveguide amplifier.

As can be appreciated by one skilled in the art, a computer system with an associated computer-readable medium containing instructions for controlling the computer system can be utilized to implement the exemplary embodiments that are disclosed herein. The computer system may include at least one computer such as a microprocessor, digital signal processor, and associated peripheral electronic circuitry. Other hardware approaches such as DSP (digital signal processor) and FPGA (field programmable gate array) may also be used to implement the exemplary embodiments.

While the invention has been described with respect to specific examples including presently preferred modes of carrying out the invention, those skilled in the art will appreciate that there are numerous variations and permutations of the above described systems and techniques that fall within the scope of the invention as set forth in the appended claims.

**Claims**

1. A Raman fiber amplifier (2300) that supports a plurality of optical input signal channels (2301), comprising:

   M Raman pumps (2317), each Raman pump injecting optical power at an assigned pump frequency into an optical transmission fiber (2315) that provides Raman gain,
   a partitioning unit comprising:

   a coupler (2303) that out couples a portion of a total power of the optical input signal channels (2301) before entering the Raman optical fiber (2315);
   a 1 by K band wavelength-division multiplexer (2305) that partitions the out coupled portion of the optical input signals into at least two wavelength regions ($S_1, ... S_K$), wherein K is an integer greater than one; and
   at least two photodetectors (2307 - 2309), providing an indication of the input power variation ($\Delta S_1, ... \Delta S_K$) of the optical input signal channels for each of the at least two wavelength regions ($S_1, ... S_K$) before amplification by the Raman optical fiber (2315);

   a control unit (2311) configured for determining, in an open loop configuration, a pump power adjustment for each of the M Raman pumps (2317) using a predetermined function;
   the predetermined function relating the input power variations ($\Delta S_1, ... \Delta S_K$) associated with each of the at least two wavelength regions ($S_1, ... S_K$) to the pump power adjustment for each of the M Raman pumps (2317), and
   the predetermined function corresponding to a linear relationship between the pump power adjustment for each of the M Raman pumps (2317) and the input power variations ($\Delta S_1$, ... $\Delta S_K$) associated with the at least two wavelength regions ($S_1$, ... $S_K$) the power output of each of said M Raman pumps (2317) being adjusted in accordance with said pump power adjustment for said M Raman pump,
wherein:

the Raman fiber amplifier (2300) is a backward-pumped Raman fiber amplifier,
the partitioning unit (2303, 2305, 2307 - 2309) is situated at a first geographical vocation, and
the M Raman pumps (2317) are situated at a second geographical location;
and wherein said optical transmission fiber (2315) providing Raman gain further comprises a communication channel that conveys control information from the first geographical location to the second geographical location to control the M Raman pumps (2317).

2. A Raman fiber amplifier (2400) that supports a plurality of optical input signal channels (2301), comprising:

M Raman pumps (2317), each Raman pump injecting optical-power at an assigned pump frequency into an optical transmission fiber (2315) that provides Raman gain;
a unit that provides an indication of an input power variation associated with said optical signal channels (2301), said unit comprising:

a coupler (2303) that out couples a portion of a total power of the optical input signal channels (2301) before entering the Raman optical fiber (2315);
a photodetector (2407) that provides an indication of the input power variation of the out coupled optical signal before amplification by the Raman optical fiber (2315),

a control unit (2411) configured for determining, in an open loop configuration, a pump power adjustment for each of the M Raman pumps (2317) using a predetermined function;
the predetermined function relating the input power variation associated with said optical input signal channels (2301) to the pump power adjustment for each of the M Raman pumps (2317), and
the predetermined function corresponding to a linear relationship between the pump power adjustment for each of the M Raman pumps (2317) and the measured input power variation associated with said optical input signal channels (2301);
the power output of each of said M Raman pumps (2317) being adjusted in accordance with said pump power adjustment for said M Raman pump,
wherein:

the Raman fiber amplifier (2400) is a backward-pumped Raman fiber amplifier,
the unit (2303, 2407) that provides an Indication of the input power variation associated with the optical signal channels (2301) is situated at a first geographical location, and
the M Raman pumps (2317) are situated at a second geographical location;
and wherein said optical transmission fiber (2315) providing Raman gain further comprises a communication channel that conveys control information from the first geographical location to the second geographical location to control the M Raman pumps (2317).

3. The Raman fiber amplifier of any preceding claim, the corresponding input power variation being based on a channel loading of an optical fiber system

4. The Raman fiber amplifier of claim 1 or 2, comprising a power adjustment scale corresponding to a linear scale.

5. The Raman fiber amplifier of any preceding claim, the predetermined function comprising either

$$\Delta P_L(j) \approx \sum_{k=1}^{K} T_{LL}(j,k) \Delta S_L(k)$$ , wherein k corresponds to a $k^{th}$ wavelength region,

wherein j corresponds to a $j^{th}$ M Raman pump, $\Delta S_L(k)$ corresponds to the power variation for the $k^{th}$ wavelength region as linearly scaled. $\Delta P_L(j)$ corresponds to the pump power adjustment of the $j^{th}$ M Raman pump as linearly scaled, and $T_{IL}(j,k)$ corresponds to a linear coefficient relating the pump power adjustment of the $j^{th}$ M Raman pump and the power variation for the k$^{th}$ wavelength region; or $\Delta P_d(j) \approx \sum_{k=1}^{K} T_{dL}(j,k)\Delta S_L(k)$, wherein k corresponds to a k$^{th}$ wavelength region, wherein j corresponds to a j$^{th}$ M Raman pump, $\Delta S_L(k)$ corresponds to the power variation for the k$^{th}$ wavelength region as linearly scaled, $\Delta P_d(j)$ corresponds to the pump power adjustment of the j$^{th}$ M Raman pump as logarithmically scaled, and $T_{dL}(j,k)$ corresponds to a linear coefficient relating the pump power adjustment of the j$^{th}$ Raman pump and the power variation for the k$^{th}$ wavelength region.

6. The Raman fiber amplifier of claim 5, each linear coefficient being dependent on one of a plurality of power regions.

7. The Raman fiber amplifier of claim 5 or of claim 6 when dependent directly or indirectly from claim 1, wherein the coupler obtains N coupled optical signals from the optical fiber, the N coupled optical signals having a portion of a total power of the N optical signal channels:

   and wherein the 1 by K band wavelength-division multiplexer partitions the N coupled optical signals into the K wavelength regions.

8. The Raman fiber amplifier of any of claims 5, 6, 7, further comprising:
   another control unit (2323,2423) that Is located at the second geographical location, that receives the control information over the communications channel, and that controls the corresponding power output for each said M Raman pump.

9. The Raman fiber amplifier according to claim 1, and further comprising a forward-pumped Raman fiber amplifier that supports N optical signal channels transported by an optical fiber facility, the Raman fiber amplifier comprising:

   M$_F$ Raman pumps, each M$_F$ Raman pump injecting optical power into the optical fiber facility at an assigned pump frequency;
   wherein the partitioning unit provides the N optical signal channels as partitioned into K wavelength regions and provides an indication of a respective power variation for each wavelength region before amplification by the forward-pumped Raman fiber amplifier;
   wherein the control unit determines a respective pump power adjustment for each said M$_F$ Raman pump using the predetermined function, each said M$_F$ Raman pump adjusting its respective power output in accordance with the respective pump power adjustment, wherein the predetermined function comprises:

   $\Delta P_d(j) \approx \sum_{k=1}^{K} T_{dL}(j,k)\Delta S_L(k)$, wherein k corresponds to a k$^{th}$ wavelength region, and wherein j corresponds to a j$^{th}$ M$_F$ Raman pump, $\Delta S_L(k)$ corresponds to the power variation for the k$^{th}$ wavelength region as linearly scaled. $\Delta P_d(j)$ corresponds to the pump power adjustment of the j$^{th}$ M$_F$ Raman pump as logarithmically scaled, and $T_{dL}(j,k)$ corresponds to a linear coefficient relating the pump power adjustment of the j$^{th}$ M$_F$ Raman pump and the power variation of the k$^{th}$ wavelength region; and
   wherein the Raman fiber amplifier comprises a fiber delay line, between a coupling point of the partitioning unit to the optical fiber facility and an injection point of the M$_F$ Raman pumps to the optical fiber facility, for compensating for a delay time associated with processing by the control unit.

10. A method for controlling a gain of a Raman fiber amplifier (2300) having M Raman pumps (2317) and supporting a plurality of optical input signal channels (2301), the method composing:

   a. out coupling a portion of a total power of said optical input signal channels (2310) before entering an optical transmission fiber (2315) that provides Raman gain,
   b. partitioning the out coupled portion of the optical input signals, by a 1 by K band wavelength-division multiplexer (2305), into at least two wavelength regions (S$_1$, ... S$_K$), wherein K is an integer greater or equal to one,
   c. providing, by at least two photodetectors, an indication of an input power variation ($\Delta S_1$, ... $\Delta S_K$) for each of the at least two wavelength regions (S$_1$, ... S$_K$) before amplification by the Raman optical fiber (2315),
   d. determining in an open loop configuration a pump power adjustment for each of the M Raman pumps (2317) using a predetermined function,
   the predetermined function relating the input power variation ($\Delta S_1$, ... $\Delta S_K$) associated with each of the at least

two wavelength regions ($S_1$, ... $S_K$) to the corresponding power adjustment for each of said M Raman pumps (2317), and the predetermined function corresponding to a linear relationship between the pump power adjustment for each of said M Raman pumps (2317) and the corresponding input power variation ($\Delta S_1$, ... $\Delta S_K$) associated with the at least two wavelength regions ($S_1$, ... $S_K$).

e. adjusting the output power of each of said M Raman pumps (1317) in accordance with the respective power adjustment for said Raman pump;

wherein

the Raman fiber amplifier (2300) is a backward-pumped Raman fiber amplifier, the partitioning unit (2303, 2305, 2307 - 2309) is situated at a first geographical location, and

the M Raman pumps (2317) are situated at a second geographical location,

and wherein said optical transmission fiber (2315) providing Raman gain further comprises a communication channel that conveys control information from the first geographical location to the second geographical location to control the M Raman pumps (2317).

11. A method for controlling a gain of a Raman fiber amplifier (2300) having M Raman pumps (2317) and supporting a plurality of optical input signal channels (2301), the method comprising

a. out coupling a portion of a total power of said optical input signal channels (2310) before entering an optical transmission fiber (2315) that provides Raman gain;

b. providing, by means of a photodetector (2407), an indication of an input power vanation of the out coupled optical input signal before amplification by the Raman optical fiber (2315);

c. determining in an open loop configuration a pump power adjustment for each of the M Raman pumps (2317) using a predetermined function,

the predetermined function relating the input power variation of the out coupled optical input signal to the pump power adjustment for each of said M Raman pumps (2317), and

the predetermined function corresponding to a linear relationship between the pump power adjustment for each of said M Raman pumps (2317) and the input power variation of the out coupled optical signal,

e. adjusting the output power of each of said M Raman pumps (1317) in accordance with the respective power adjustment for said Raman pump;

wherein:

the Raman fiber amplifier (2300) is a backward-pumped Raman fiber amplifier,

the unit (2303, 2407) that provides an indication of the input power variation associated with the optical signal channels (2301) is situated at a first geographical location, and

the M Raman pumps (2317) are situated at a second geographical location,

and wherein said optical transmission fiber (2315) providing Raman gain further comprises a communication channel that conveys control information from the first geographical location to the second geographical location to control the M Raman pumps (2317).

12. The method of claim 10 or 11, wherein the respective input power variation is based on a channel loading of the optical fiber system.

13. The method of claim 10 or 11, wherein a power adjustment scale corresponds to a linear scale.


**Patentansprüche**

1. Raman-Faserverstärker (2300), der eine Vielzahl von optischen Eingangssignalkanälen (2301) unterstützt, umfassend:

M Raman-Pumpen (2317), wobei jede Raman-Pumpe optische Leistung mit einer zugewiesenen Pumpfrequenz in eine optische Übertragungsfaser (2315) injiziert, die eine Raman-Verstärkung erbringt, wobei eine Aufteilungseinheit umfasst:

einen Koppler (2303), der einen Teil einer Gesamtleistung der optischen Eingangssignalkanäle (2301) vor dem Eintritt in die optische Raman-Faser (2315) auskoppelt;

14

einen 1xK-Band-Wellenlängen-Multiplexer (2305), der den Teil der ausgekoppelten optischen Eingangssignale in mindestens zwei Wellenlängenbereiche ($S_1, ... S_K$) aufteilt, wobei K eine ganze Zahl ist, die größer als eins ist; und

mindestens zwei Fotodetektoren (2307-2309), die eine Angabe über die Eingangsleistungsänderung ($\Delta S_1, ... \Delta S_K$) der optischen Eingangssignalkanäle für jeden der mindestens zwei Wellenlängenbereiche ($S_1, ... S_K$) vor der Verstärkung durch die optische Raman-Faser (2315) liefern;

eine Steuereinheit (2311), die dafür konfiguriert ist, in einer offenen Regelkreiskonfiguration die Einstellung einer Pumpleistung für jede der M Raman-Pumpen (2317) unter Verwendung einer vorbestimmten Funktion zu bestimmen;

wobei die vorbestimmte Funktion die Eingangsleistungsänderungen ($\Delta S_1, ... \Delta S_K$), die jedem der mindestens zwei Wellenlängenbereiche ($S_1, ... S_K$) zugeordnet sind, mit der Einstellung der Pumpleistung für jede der M Raman-Pumpen (2317) in Beziehung setzt und

wobei die vorbestimmte Funktion einer linearen Beziehung zwischen der Einstellung der Pumpleistung für jede der M Raman-Pumpen (2317) und der Eingangsleistungsänderungen ($\Delta S_1, ... \Delta S_K$), die den mindestens zwei Wellenlängenbereichen ($S_1, ... S_K$) zugeordnet sind, entspricht;

wobei die Ausgangsleistung jeder der M Raman-Pumpen (2317) gemäß dieser Einstellung der Pumpleistung für die M Raman-Pumpe eingestellt wird,

wobei

der Raman-Faserverstärker (2300) ein rückwärts gepumpter Raman-Faserverstärker ist,

die Aufteilungseinheit (2303, 2305, 2307 - 2309) sich an einem ersten geographischen Standort befindet und die M Raman-Pumpen (2317) sich an einem zweiten geographischen Standort befinden;

und wobei die optische Übertragungsfaser (2315), die eine Raman-Verstärkung erbringt, ferner einen Kommunikationskanal umfasst, der Steuerinformation von dem ersten geographischen Standort an den zweiten geografischen Standort übermittelt, um die M Raman-Pumpen (2317) zu steuern.

2. Raman-Faserverstärker (2400), der eine Vielzahl von optischen Eingangssignalkanälen (2301) unterstützt, umfassend:

M Raman-Pumpen (2317), wobei jede Raman-Pumpe optische Leistung mit einer zugewiesenen Pumpfrequenz in eine optische Übertragungsfaser (2315) injiziert, die eine Raman-Verstärkung erbringt;

eine Einheit, die eine Angabe über eine Eingangsleistungsänderung liefert, die den optischen Signalkanälen (2301) zugeordnet ist, wobei die Einheit umfasst:

einen Koppler (2303), der einen Teil einer Gesamtleistung der optischen Eingangssignalkanäle (2301) vor dem Eintritt in die optische Raman-Faser (2315) auskoppelt;

einen Fotodetektor (2407), der eine Angabe über die Eingangsleistungsänderung des ausgekoppelten optischen Signals vor der Verstärkung durch die optische Raman-Faser (2315) liefert;

eine Steuereinheit (2411), die dafür konfiguriert ist, in einer offenen Regelkreiskonfiguration eine Einstellung der Pumpleistung für jede der M Raman-Pumpen (2317) unter Verwendung einer vorbestimmten Funktion zu bestimmen;

wobei die vorbestimmte Funktion die Eingangsleistungsänderung, die den optischen Eingangssignalkanälen (2301) zugeordnet ist, mit der Einstellung der Pumpleistung für jede der M Raman-Pumpen (2317) in Beziehung setzt und

wobei die vorbestimmte Funktion einer linearen Beziehung zwischen der Einstellung der Pumpleistung für jede der M Raman-Pumpen (2317) und der gemessenen Eingangsleistungsänderung, die den optischen Eingangssignalkanälen (2301) zugeordnet ist, entspricht;

wobei die Leistungsabgabe jeder der M Raman-Pumpen (2317) gemäß dieser Einstellung der Pumpleistung für die M Raman-Pumpe eingestellt wird,

wobei

der Raman-Faserverstärker (2400) ein rückwärts gepumpter Raman-Faserverstärker ist,

die Einheit (2303, 2407), die eine Angabe über die Eingangsleistungsänderung liefert, die den optischen Signalkanälen (2301) zugeordnet ist, sich an einem ersten geographischen Standort befindet und die M Raman-Pumpen (2317) sich an einem zweiten geographischen Standort befinden;

und wobei die optische Übertragungsfaser (2315), die eine Raman-Verstärkung erbringt, ferner einen Kommunikationskanal umfasst, der Steuerinformation von dem ersten geographischen Standort an den zweiten geografischen Standort übermittelt, um die M Raman-Pumpen (2317) zu steuern.

3. Raman-Faserverstärker nach einem der vorhergehenden Ansprüche, wobei die entsprechende Eingangsleistungsänderung auf einer Kanalbelastung eines optischen Fasersystems beruht.

4. Raman-Faserverstärker nach Anspruch 1 oder 2, umfassend eine Leistungseinstellungsskala, die einer linearen Skala entspricht.

5. Raman-Faserverstärker nach einem der vorhergehenden Ansprüche, wobei die vorbestimmte Funktion Folgendes umfasst, und zwar entweder:

$$\Delta P_L(j) \approx \sum_{k=1}^{K} T_{LL}(j,k)\Delta S_L(k)$$

wobei k einem k-ten Wellenlängenbereich entspricht, wobei j einer j-ten M Raman-Pumpe entspricht, $\Delta S_L(k)$ der Leistungsänderung für den k-ten Wellenlängenbereich linear skaliert entspricht, $\Delta P_L(j)$ der Einstellung der Pumpleistung der j-ten M Raman-Pumpe linear skaliert entspricht und $T_{IL}(j, k)$ einem linearen Koeffizienten entspricht, der sich auf die Einstellung der Pumpleistung der j-ten M Raman-Pumpe und die Leistungsänderung für den k-ten Wellenlängenbereich bezieht; oder:

$$\Delta P_d(j) \approx \sum_{k=1}^{K} T_{dL}(j,k)\Delta S_L(k)$$

wobei k einem k-ten Wellenlängenbereich entspricht, wobei j einer j-ten M Raman-Pumpe entspricht, $\Delta S_L(k)$ der Leistungsänderung für den k-ten Wellenlängenbereich linear skaliert entspricht, $\Delta P_d(j)$ der Einstellung der Pumpleistung der j-ten M Raman-Pumpe logarithmisch skaliert entspricht und $T_{dL}(j, k)$ einem linearen Koeffizienten entspricht, der sich auf die Einstellung der Pumpleistung der j-ten Raman-Pumpe und die Leistungsänderung für den k-ten Wellenlängenbereich bezieht.

6. Raman-Faserverstärker nach Anspruch 5, wobei jeder lineare Koeffizient von einem aus einer Vielzahl von Leistungsbereichen abhängig ist.

7. Raman-Faserverstärker nach Anspruch 5 oder 6, sofern direkt oder indirekt abhängig von Anspruch 1, wobei der Koppler N gekoppelte optische Signale von der optischen Faser erhält, wobei die N gekoppelten optischen Signale einen gewissen Anteil an einer Gesamtleistung der N optischen Signalkanäle haben; und wobei der 1xK-Band-Wellenlängen-Multiplexer die N gekoppelten optischen Signale in die K-Wellenlängenbereiche aufteilt.

8. Raman-Faserverstärker nach einem der Ansprüche 5, 6 oder 7, ferner umfassend:

eine weitere Steuereinheit (2323, 2423), die sich an dem zweiten geographischen Standort befindet, die die Steuerinformation über den Kommunikationskanal empfängt und die die entsprechende Leistungsabgabe für jede M Raman-Pumpe steuert.

9. Raman-Faserverstärker nach Anspruch 1, ferner umfassend einen vorwärts gepumpten Raman-Faserverstärker, der N optische Signalkanäle unterstützt, die durch eine optische Fasereinrichtung transportiert werden, wobei der Raman-Faserverstärker umfasst:

$M_F$ Raman-Pumpen, wobei jede $M_F$ Raman-Pumpe optische Leistung mit einer zugewiesenen Pumpenfrequenz in die optische Fasereinrichtung injiziert; wobei die Aufteilungseinheit die in K Wellenlängenbereiche aufgeteilten N optischen Signalkanäle und eine Angabe über eine jeweilige Leistungsänderung für jeden Wellenlängenbereich vor der Verstärkung durch den vorwärts gepumpten Raman-Faserverstärker liefert; wobei die Steuereinheit eine jeweilige Einstellung der Pumpleistung für jede $M_F$ Raman-Pumpe unter Verwendung der vorbestimmten Funktion bestimmt, wobei jede $M_F$ Raman-Pumpe ihre jeweilige Leistungsabgabe gemäß der jeweiligen Einstellung der Pumpleistung einstellt, wobei die vorgegebene Funktion umfasst:

$$\Delta P_d(j) \approx \sum_{k=1}^{K} T_{dL}(j,k)\Delta S_L(k)$$

wobei k einem k-ten Wellenlängenbereich entspricht und wobei j einer j-ten $M_F$ Raman-Pumpe entspricht, $\Delta S_L(k)$ der Leistungsändering für den k-ten Wellenlängenbereich linear skaliert entspricht, $\Delta P_d(j)$ der Einstellung der Pumpleistung der j-ten $M_F$ Raman-Pumpe logarithmisch skaliert entspricht und $T_{dL}(j, k)$ einem linearen Koeffizienten entspricht, der sich auf die Einstellung der Pumpleistung der j-ten $M_F$ Raman-Pumpe und die Leistungsänderung des k-ten Wellenlängenbereichs bezieht; und

wobei der Raman-Faserverstärker eine Faserverzögerungsleitung zwischen einem Kopplungspunkt der Aufteilungseinheit zu der optischen Fasereinrichtung und einem Injektionspunkt der $M_F$ Raman-Pumpen zu der optischen Fasereinrichtung umfasst, um eine Verzögerungszeit, die mit der Verarbeitung durch die Steuereinheit zusammenhängt, zu kompensieren.

10. Verfahren zum Regeln einer Verstärkung eines Raman-Faserverstärkers (2300), der M Raman-Pumpen (2317) aufweist und eine Vielzahl von optischen Eingangssignalkanälen (2301) unterstützt, wobei das Verfahren umfasst:

a. Auskoppeln eines Teils einer Gesamtleistung der optischen Eingangssignalkanäle (2310) vor dem Eintritt in eine optische Übertragungsfaser (2315), die eine Raman-Verstärkung erbringt;
b. Aufteilen des ausgekoppelten Teils der optischen Eingangsignale durch einen lxK-Band-Wellenlängen-Multiplexer (2305) in mindestens zwei Wellenlängenbereiche ($S_1, ... S_K$), wobei K eine ganze Zahl ist, die größer oder gleich eins ist;
c. Liefern einer Angabe über eine Eingangsleistungsänderung ($\Delta S_1, ... \Delta S_K$) für jeden der mindestens zwei Wellenlängenbereiche ($S_1, ... S_K$) durch mindestens zwei Fotodetektoren vor der Verstärkung durch die optische Raman-Faser (2315);
d. Bestimmen einer Einstellung einer Pumpleistung für jede der M Raman-Pumpen (2317) in einer offenen Regelkreiskonfiguration unter Verwendung einer vorbestinmiten Funktion,
wobei die vorbestimmte Funktion die Eingangsleistungsänderungen ($\Delta S_1, ... \Delta S_K$), die jedem der mindestens zwei Wellenlängenbereiche ($S_1, ... S_K$) zugeordnet sind, mit der entsprechenden Einstellung der Leistung für jede der M Raman-Pumpen (2317) in Beziehung setzt und
wobei die vorbestimmte Funktion einer linearen Beziehung zwischen der Einstellung der Pumpleistung für jede der M Raman-Pumpen (2317) und der entspechenden Eingangsleistungsänderung ($\Delta S_1, ... \Delta S_K$), die den mindestens zwei Wellenlängenbereichen ($S_1, ... S_K$) zugeordnet ist, entspricht.
e. Einstellen der Ausgangsleistung für jede der M Raman-Pumpen (1317) gemäß der jeweiligen Leistungseinstellung für die Raman-Pumpe,

wobei
der Raman-Faserverstärker (2300) ein rückwärts gepumpter Raman-FaserVerstärker ist,
die Aufteilungseinheit (2303, 2305, 2307 - 2309) sich an einem ersten geographischen Standort befindet und
die M Raman-Pumpen (2317) sich an einem zweiten geographischen Standort befinden;
und wobei die optische Übertragungsfaser (2315), die eine Raman-Verstärkung erbringt, ferner einen Kommunikationskanal umfasst, der Steuerinformation von dem ersten geographischen Standort an den zweiten geografischen Standort übermittelt, um die M Raman-Pumpen (2317) zu steuern.

11. Verfahren zum Regeln einer Verstärkung eines Raman-Faserverstärkers (2300), der M Raman-Pumpen (2317) aufweist und eine Vielzahl von optischen Eingangssignalkanälen (2301) unterstützt, wobei das Verfahren umfasst:

a. Auskoppeln eines Teils einer Gesamtleistung der optischen Eingangssignalkanäle (2310) vor dem Eintritt in eine optische Übertragungsfaser (2315), die eine Raman-Verstärkung erbringt;
b. Liefern einer Angabe über eine Eingangsleistungsänderung des ausgekoppelten optischen Eingangssignals mittels eines Fotodetektors (2407) vor der Verstärkung durch die optische Raman-Faser (2315);
c. Bestimmen einer Einstellung einer Pumpleistung für jede der M Raman-Pumpen (2317) in einer offenen Regelkreiskonfiguration unter Verwendung einer vorbestimmten Funktion;
wobei die vorbestimmte Funktion die Eingangsleistungsänderung des ausgekoppelten optischen Eingangssignals mit der Einstellung der Pumpleistung für jede der M Raman-Pumpen (2317) in Beziehung setzt und
wobei die vorbestimmte Funktion einer lineare Beziehung zwischen der Einstellung der Pumpleistung für jede der M Raman-Pumpen (2317) und der Eingangsleistungsänderung des ausgekoppelten optischen Signals entspricht;
d. Einstellen der Ausgangsleistung jeder der M Raman-Pumpen (2317) gemäß der jeweiligen Leistungseinstellung für die Raman-Pumpe;

wobei
der Raman-Faserverstärker (2300) ein rückwärts gepumpter Raman-FaserVerstärker ist,

**EP 1 696 524 B1**

die Einheit (2303, 2407), die eine Angabe über die Eingangsleistungsänderung liefert, die den optischen Signalkanälen (2301) zugeordnet ist, sich an einem ersten geografischen Standort befindet und
die M Raman-Pumpen (2317) sich an einem zweiten geografischen Standort befinden;
und wobei die optische Übertragungsfaser (2315), die eine Raman-Verstärkung erbringt, ferner einen Kommunikationskanal umfasst, der Steuerinformation von dem ersten geografischen Standort an den zweiten geografischen Standort übermittelt, um die M Raman-Pumpen (2317) zu steuern.

12. Verfahren nach Anspruch 10 oder 11, wobei die jeweilige Eingangsleistungsänderung auf einer Kanalbelastung des optischen Fasersystems beruht.

13. Verfahren nach Anspruch 10 oder 11, wobei eine Leistungseinstellungsskala einer linearen Skala entspricht.


**Revendications**

1. Amplificateur à fibre Raman (2300) qui supporte une pluralité de canaux de signal d'entrée optique (2301), comprenant :

   M pompes Raman (2317), chaque pompe Raman injectant de la puissance optique à une fréquence de pompage assignée dans une fibre de transmission optique (2315) qui fournit un gain Raman, une unité de partitionnement comprenant :

   un coupleur (2303) qui découple une partie d'une puissance totale des canaux de signal d'entrée optique (2301) avant d'entrer dans la fibre optique Raman (2315) ;
   un multiplexeur par répartition en longueur d'onde de bande 1 par K (2305) qui partitionne la partie des signaux d'entrée optique découplée en au moins deux régions de longueurs d'ondes ($S_1$, ..., $S_K$), où K est un entier supérieur à un ; et
   au moins deux photodétecteurs (2307-2309) fournissant une indication de la variation de puissance d'entrée ($\Delta S_1$, ..., $\Delta S_K$) des canaux de signal d'entrée optique pour chacune des au moins deux régions de longueurs d'ondes ($S_1$, ..., $S_K$) avant amplification par la fibre optique Raman (2315) ;
   une unité de contrôle (2311) configurée pour déterminer, dans une configuration en boucle ouverte, un ajustement de puissance de pompage pour chacune des M pompes Raman (2317) au moyen d'une fonction prédéterminée ;
   la fonction prédéterminée reliant les variations de puissance d'entrée ($\Delta S_1$, ..., $\Delta S_K$) associées à chacune des au moins deux régions de longueurs d'ondes ($S_1$, ..., $S_K$) à l'ajustement de la puissance de pompage pour chacune des M pompes Raman (2317), et
   la fonction prédéterminée correspondant à une relation linéaire entre l'ajustement de la puissance de pompage pour chacune des M pompes Raman (2317) et les variations de puissance d'entrée ($\Delta S_1$, ..., $\Delta S_K$) associées aux au moins deux régions de longueurs d'ondes ($S_1$, ..., $S_K$) ;
   la sortie de puissance de chacune desdites M pompes Raman (2317) étant ajustée conformément audit ajustement de la puissance de pompage pour ladite M pompe Raman,
   où :

   l'amplificateur à fibre Raman (2300) est un amplificateur à fibre Raman à pompage vers l'arrière,
   l'unité de partitionnement (2303, 2305, 2307-2309) est située au niveau d'un premier emplacement géographique, et
   les M pompes Raman (2317) sont situées au niveau d'un second emplacement géographique ;
   et où ladite fibre de transmission optique (2315) fournissant un gain Raman comprend en outre un canal de communication qui achemine des informations de contrôle depuis le premier emplacement géographique vers le second emplacement géographique pour contrôler les M pompes Raman (2317).

2. Amplificateur à fibre Raman (2400) qui supporte une pluralité de canaux de signal d'entrée optique (2301) comprenant :

   M pompes Raman (2317), chaque pompe Raman injectant de la puissance optique à une fréquence de pompage assignée dans une fibre de transmission optique (2315) qui fournit un gain Raman ;
   une unité qui fournit une indication d'une variation de puissance d'entrée associée auxdits canaux de signal optique (2301) ladite unité comprenant :

**18**

un coupleur (2303) qui découple une partie d'une puissance totale des canaux de signal d'entrée optique (2301) avant d'entrer dans la fibre optique Raman (2315) ;

un photodétecteur (2407) fournissant une indication de la variation de puissance d'entrée du signal optique découplé avant amplification par la fibre optique Raman (2315) ;

une unité de contrôle (2411) configurée pour déterminer, dans une configuration en boucle ouverte, un ajustement de la puissance de pompage pour chacune des M pompes Raman (2317) au moyen d'une fonction prédéterminée ;

la fonction prédéterminée reliant la variation de puissance d'entrée associée auxdits canaux de signal d'entrée optique à l'ajustement de la puissance de pompage pour chacune des M pompes Raman (2317), et

la fonction prédéterminée correspondant à une relation linéaire entre l'ajustement de la puissance de pompage pour chacune des M pompes Raman (2317) et la variation de puissance d'entrée mesurée associée auxdits canaux de signal d'entrée optique (2301) ;

la sortie de puissance de chacune desdites M pompes Raman (2317) étant ajustée conformément audit ajustement de la puissance de pompage pour ladite M pompe Raman,

où :

l'amplificateur à fibre Raman (2400) est un amplificateur à fibre Raman à pompage vers l'arrière,

l'unité (2303, 2407) qui fournit une indication sur la variation de puissance d'entrée associée aux canaux de signal optique (2301) est située au niveau d'un premier emplacement géographique, et

les M pompes Raman (2317) sont situées au niveau d'un second emplacement géographique ;

et où ladite fibre de transmission optique (2315) fournissant un gain Raman comprend en outre un canal de communication qui achemine des informations de contrôle depuis le premier emplacement géographique vers le second emplacement géographique pour contrôler les M pompes Raman (2317).

3. Amplificateur à fibre Raman selon l'une quelconque des revendications précédentes, la variation de puissance d'entrée correspondante étant basée sur une charge de canal d'un système à fibre optique.

4. Amplificateur à fibre Raman selon la revendication 1 ou la revendication 2, comprenant une échelle d'ajustement de puissance correspondant à une échelle linéaire.

5. Amplificateur à fibre Raman selon l'une quelconque des revendications précédentes, la fonction prédéterminée comprenant soit :

$\Delta P_L(j) \approx \sum_{k=1}^{K} T_{LL}(j,k) \Delta S_L(k)$, où k correspond à une $k^{\text{ième}}$ région de longueurs d'ondes, où j correspond à une $j^{\text{ième}}$ M pompe Raman, $\Delta S_L(k)$ correspond à la variation de puissance pour la $k^{\text{ième}}$ région de longueurs d'ondes mise à l'échelle linéairement, $\Delta P_L(j)$ correspond à l'ajustement de la puissance de pompage de la $j^{\text{ième}}$ Mpompe Raman mise à l'échelle linéairement, et $T_{IL}(j,k)$ correspond à un coefficient linéaire concernant l'ajustement de la puissance de pompage de la $j^{\text{ième}}$ M pompe Raman et la variation de puissance pour la $k^{\text{ième}}$ région de longueurs d'ondes ; soit $\Delta P_d(j) \approx \sum_{k=1}^{K} T_{dL}(j,k) \Delta S_L(k)$, où k correspond à une $k^{\text{ième}}$ région de longueurs d'ondes, où j correspond à une $j^{\text{ième}}$ M pompe Raman, $\Delta S_L(k)$ correspond à la variation de puissance pour la $k^{\text{ième}}$ région de longueurs d'ondes telle que mise à l'échelle linéairement, $\Delta P_d(j)$ correspond à l'ajustement de la puissance de pompage de la $j^{\text{ième}}$ M pompe Raman telle que mise à l'échelle logarithmiquement, et $T_{dL}(j, k)$ correspond à un coefficient linéaire concernant l'ajustement de la puissance de pompage de la $j^{\text{ième}}$ pompe Raman et la variation de puissance pour la $k^{\text{ième}}$ région de longueurs d'ondes.

6. Amplificateur à fibre Raman selon la revendication 5, chaque coefficient linéaire dépendant d'une région parmi une pluralité de régions de puissance.

7. Amplificateur à fibre Raman selon la revendication 5 ou la revendication 6, lorsqu'elles dépendent directement ou indirectement de la revendication 1, où le coupleur obtient N signaux optiques couplés depuis la fibre optique, les N signaux optiques couplés ayant une partie d'une puissance totale des N canaux de signal optique ;

et où le multiplexeur par répartition en longueur d'onde de bande 1 par K partitionne les N signaux optiques couplés dans les K régions de longueurs d'ondes.

8. Amplificateur à fibre Raman selon l'une quelconque des revendications 5, 6 ou 7, comprenant en outre :

une autre unité de contrôle (2323, 2423) qui est située au niveau du second emplacement géographique, qui reçoit les informations de contrôle sur le canal de communication, et qui contrôle la sortie de puissance correspondante pour chacune desdites M pompes Raman.

9. Amplificateur à fibre Raman selon la revendication 1, comprenant en outre un amplificateur à fibre Raman à pompage vers l'arrière qui supporte N canaux de signal optique transportés par une installation à fibre optique, l'amplificateur à fibre Raman comprenant :

$M_F$ pompes Raman, chaque $M_F$ pompe Raman injectant de la puissance optique dans l'installation à fibre optique à une fréquence de pompage assignée ;

où l'unité de partitionnement fournit les N canaux de signal optique partitionnés dans K régions de longueurs d'ondes et fournit une indication sur une variation de puissance respective pour chaque région de longueurs d'ondes avant amplification par l'amplificateur à fibre Raman à pompage vers l'avant ;

où l'unité de contrôle détermine un ajustement de puissance de pompage respectif pour chacune desdites $M_F$ pompes Raman au moyen de la fonction prédéterminée, chacune desdites $M_F$ pompes Raman ajustant sa sortie de puissance respective conformément à l'ajustement de puissance de pompage respectif, où la fonction prédéterminée comprend :

$$\Delta P_d(j) \approx \sum_{k=1}^{K} T_{dL}(j,k)\Delta S_L(k),$$ où k correspond à une $k^{ième}$ région de longueurs d'ondes, et où j correspond à une $j^{ième}$ $M_F$ pompe Raman, $\Delta S_L(k)$ correspond à la variation de puissance pour la $k^{ième}$ région de longueurs d'ondes telle que mise à l'échelle linéairement, $\Delta P_d(j)$ correspond à l'ajustement de la puissance de pompage de la $j^{ième}$ $M_F$ pompe Raman telle que mise à l'échelle logarithmiquement, et $T_{dL}(j,k)$ correspond à un coefficient linéaire concernant l'ajustement de la puissance de pompage de la $j^{ième}$ $M_F$ pompe Raman et la variation de puissance de la $k^{ième}$ région de longueurs d'ondes ; et

où l'amplificateur à fibre Raman comprend une ligne à retard fibrée, entre un point de couplage de l'unité de partitionnement vers l'installation à fibre optique et un point d'injection des $M_F$ pompes Raman vers l'installation à fibre optique, pour compenser un temps de retard associé au traitement par l'unité de contrôle.

10. Procédé pour contrôler un gain d'un amplificateur à fibre Raman (2300) comprenant M pompes Raman (2317) et supportant une pluralité de canaux de signal d'entrée optique (2301), le procédé comprenant les étapes suivantes :

a. découpler une partie d'une puissance totale desdits canaux de signal d'entrée optique (2310) avant d'entrer dans une fibre de transmission optique (2315) qui fournit un gain Raman ;

b. partitionner la partie des signaux d'entrée optique découplée, par un multiplexeur par répartition en longueur d'onde de bande 1 par K (2305), en au moins deux régions de longueurs d'ondes ($S_1$, ..., $S_K$), où K est un entier supérieur ou égal à un ;

c. fournir, par au moins deux photodétecteurs, une indication sur une variation de puissance d'entrée ($\Delta S_1$, ..., $\Delta S_K$) pour chacune des au moins deux régions de longueurs d'ondes ($S_1$, ..., $S_K$) avant amplification par la fibre optique Raman (2315) ;

d. déterminer, dans une configuration en boucle ouverte, un ajustement de puissance de pompage pour chacune des M pompes Raman (2317) au moyen d'une fonction prédéterminée,

la fonction prédéterminée reliant les variations de puissance d'entrée ($\Delta S_1$, ..., $AS_K$) associées à chacune des au moins deux régions de longueurs d'ondes ($S_1$, ..., $S_K$) à l'ajustement de la puissance correspondant pour chacune desdites M pompes Raman (2317), et

la fonction prédéterminée correspondant à une relation linéaire entre l'ajustement de la puissance de pompage pour chacune desdites M pompes Raman (2317) et la variation de puissance d'entrée ($\Delta S_1$, ..., $\Delta S_K$) correspondante associée aux au moins deux régions de longueurs d'ondes ($S_1$, ..., $S_K$) ;

e. ajuster la puissance de sortie de chacune desdites M pompes Raman (1317) conformément à l'ajustement de puissance respectif pour ladite pompe Raman ;

où :

l'amplificateur à fibre Raman (2300) est un amplificateur à fibre Raman à pompage vers l'arrière,

l'unité de partitionnement (2303, 2305, 2307-2309) est située au niveau d'un premier emplacement géographique, et

les M pompes Raman (2317) sont situées au niveau d'un second emplacement géographique ;

et où ladite fibre de transmission optique (2315) fournissant un gain Raman comprend en outre un canal de communication qui achemine des informations de contrôle depuis le premier emplacement géographique vers le second emplacement géographique pour contrôler les M pompes Raman (2317).

11. Procédé pour contrôler un gain d'un amplificateur à fibre Raman (2300) comprenant M pompes Raman (2317) et supportant une pluralité de canaux de signal d'entrée optique (2301), le procédé comprenant les étapes suivantes :

a. découpler une partie d'une puissance totale desdits canaux de signal d'entrée optique (2310) avant d'entrer dans une fibre de transmission optique (2315) qui fournit un gain Raman ;
b. fournir, au moyen d'un photodétecteur (2407), une indication sur une variation de puissance d'entrée du signal d'entrée optique découplé avant amplification par la fibre optique Raman (2315) ;
c. déterminer, dans une configuration en boucle ouverte, un ajustement de puissance de pompage pour chacune des M pompes Raman (2317) au moyen d'une fonction prédéterminée,
la fonction prédéterminée reliant la variation de puissance d'entrée du signal d'entrée optique découplé au niveau de l'ajustement de la puissance de pompage pour chacune desdites M pompes Raman (2317), et
la fonction prédéterminée correspondant à une relation linéaire entre l'ajustement de la puissance de pompage pour chacune desdites M pompes Raman (2317) et la variation de puissance d'entrée du signal optique découplé ;
d. ajuster la puissance de sortie de chacune desdites M pompes Raman (1317) conformément à l'ajustement de puissance respectif pour ladite pompe Raman ;

où :

l'amplificateur à fibre Raman (2300) est un amplificateur à fibre Raman à pompage vers l'arrière,
l'unité (2303, 2407) qui fournit une indication sur la variation de puissance d'entrée associée aux canaux de signal optique (2301) est située au niveau d'un premier emplacement géographique, et
les M pompes Raman (2317) sont situées au niveau d'un second emplacement géographique ;
et où ladite fibre de transmission optique (2315) fournissant un gain Raman comprend en outre un canal de communication qui achemine des informations de contrôle depuis le premier emplacement géographique vers le second emplacement géographique pour contrôler les M pompes Raman (2317).

12. Procédé selon la revendication 10 ou la revendication 11, dans lequel la variation de puissance d'entrée respective est basée sur une charge de canal du système à fibre optique.

13. Procédé selon la revendication 10 ou la revendication 11, dans lequel une échelle d'ajustement de puissance correspond à une échelle linéaire.

FIG. 1A (Prior Art)

FIG. 1B (Prior Art)

EP 1 696 524 B1

FIG. 2

<u>300</u>

FIG. 3

<u>400</u>

FIG. 4

FIG. 5

<u>600</u>

FIG. 6

700

FIG. 7

800

FIG. 8

900

FIG. 9

1000

FIG. 10

FIG. 11

<u>1200</u>

FIG. 12

1300

FIG. 13

1400

FIG. 14

1500

FIG. 15

FIG. 16

<u>1700</u>

FIG. 17

1800

FIG. 18

FIG. 19

EP 1 696 524 B1

FIG. 20

FIG. 21

FIG. 22

FIG. 23

2315

2321

Coupler

Telemetry
add WDM

Trans.
fiber

Signal-
pump
combiner

Telemetry
drop WDM

**Input signal**

2303

2313

2319

2301

PD

**Control
unit**

**M
pumps**

**Control
unit**

2407

2411

2317

2423

FIG. 24

EP 1 696 524 B1

FIG. 25

EP 1 696 524 B1

FIG. 26

EP 1 696 524 B1

## REFERENCES CITED IN THE DESCRIPTION

**Patent documents cited in the description**

- US 65611105 P
- US 2002054733 A
- US 20030117694 A
- US 6624926 B